# EUROPÄISCHE PATENTSCHRIFT

(11) **EP 3 890 968 B1**
(45) Veröffentlichungstag und Bekanntmachung des Hinweises auf die Patenterteilung: **30.11.2022**
(21) Anmeldenummer: 19769503.4
(22) Anmeldetag: 19.09.2019
(51) Int. Cl.: B32B 17/10, B60J 3/04, G02F 1/13, G02F 1/1334, G02F 1/153, G02F 1/17

(54) **VERBUNDSCHEIBE MIT FUNKTIONSELEMENT MIT ELEKTRISCH STEUERBAREN OPTISCHEN EIGENSCHAFTEN UND KONZENTRATIONSGRADIENT DER AKTIVEN SUBSTANZ**
LAMINATED GLAZING COMPRISING A FUNCTIONAL ELEMENT WITH ELECTRICALLY CONTROLLED OPTICAL PROPERTIES AND CONCENTRATION GRADIENT OF ACTIVE SUBSTANCE
VITRAGE FEUILLETÉ AYANT UN ÉLÉMENT FONCTIONNEL À PROPRIÉTÉS OPTIQUES ÊLECTROCOMMANDABLES ET À GRADIENT DE CONCENTRATION DE LA SUBSTANCE ACTIVE

(30) Priorität: 06.12.2018 EP 18210673
(43) Veröffentlichungstag der Anmeldung: 13.10.2021
(73) Patentinhaber: Saint-Gobain Glass France, 92400 Courbevoie (FR)
(72) Erfinder: KLEIN, Marcel, 52499 Baesweiler (DE); DO ROSARIO, Jefferson, 52064 Aachen (DE)
(74) Vertreter: Schönen, Iris
(86) Internationale Anmeldenummer: PCT/EP2019/075201
(87) Internationale Veröffentlichungsnummer: WO 2020/114639

(56) Entgegenhaltungen:
- EP-A2- 0 903 615
- WO-A1-2017/157626
- DE-A1-102005 007 427
- DE-A1-102011 003 256

## Beschreibung

Die Erfindung betrifft eine Verbundscheibe mit Funktionselement mit elektrisch steuerbaren optischen Eigenschaften und einem Konzentrationsgradienten der aktiven Substanz innerhalb der aktiven Schicht, sowie ein Verfahren zur Herstellung einer Verbundscheibe mit einem solchen Funktionselement.

Im Fahrzeugbereich und im Baubereich werden oftmals Verbundscheiben mit elektrisch steuerbaren Funktionselementen zum Sonnenschutz oder zum Sichtschutz eingesetzt.

So sind beispielsweise Windschutzscheiben bekannt, in denen eine Sonnenblende in Form eines Funktionselements mit elektrisch steuerbaren optischen Eigenschaften integriert ist. Dabei ist insbesondere die Transmission oder das Streuverhalten von elektromagnetischer Strahlung im sichtbaren Bereich elektrisch steuerbar. Die Funktionselemente sind in der Regel Mehrschichtfolien, die in eine Verbundscheibe einlaminiert oder an diese angeklebt werden. Diese Mehrschichtfolien umfassen im Allgemeinen eine aktive Schicht zwischen zwei Flächenelektroden, wobei die Anordnung meist durch Trägerfolien stabilisiert wird. Durch Anlegen einer Spannung an der aktiven Schicht über die Flächenelektroden können die Transmissionseigenschaften der aktiven Schicht verändert werden. Bei Windschutzscheiben kann der Fahrer das Transmissionsverhalten der Scheibe selbst gegenüber Sonnenstrahlung steuern. So kann auf eine herkömmliche mechanische Sonnenblende verzichtet werden. Dadurch kann das Gewicht des Fahrzeugs reduziert werden und es wird Platz im Dachbereich gewonnen. Zudem ist das elektrische Steuern der Sonnenblende für den Fahrer komfortabler als das manuelle Herunterklappen der mechanischen Sonnenblende.

Windschutzscheiben mit derartigen elektrisch steuerbaren Sonnenblenden sind beispielsweise bekannt aus WO 2014/086555 A1, DE 102013001334 A1, DE 102005049081 B3, DE 102005007427 A1 und DE 102007027296 A1. DE 10 2005 007 427 A1 offenbart ein Kraftfahrzeug mit einer Windschutzscheibe mit einer in zumindest einem Segment regelbaren Transparenz, wobei die Transparenz in Abhängigkeit von einem Blendsensor automatisch geregelt wird. Darüber hinaus werden Funktionselemente auch zur Verschattung von Fahrzeugverglasungen als Dachscheiben verwendet, wie beispielsweise in EP 2010385 B1 beschrieben.

Typische elektrisch steuerbare Funktionselemente enthalten beispielsweise elektrochrome Schichtstrukturen oder Suspended Particle Device (SPD)-Folien. Weitere mögliche Funktionselemente zur Realisierung eines elektrisch steuerbaren Sonnenschutzes sind sogenannte PDLC-Funktionselemente (*polymer dispersed liquid crystal*). Deren aktive Schicht enthält Flüssigkristalle, welche in eine Polymermatrix eingelagert sind. Wird keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Das PDLC-Funktionselement wirkt weniger durch Herabsetzung der Gesamttransmission, sondern durch Erhöhung der Streuung, um den Blendschutz zu gewährleisten.

Einlaminierte Funktionselemente und insbesondere PDLC-Funktionselemente zeigen im Randbereich oftmals unerwünschte Alterungserscheinungen, wie Aufhellungen und Veränderungen in der Abschattung. Als Ursache dafür wird die Diffusion von Verbindungen, insbesondere von Weichmachern, aus den thermoplastischen Verbundfolien der Verbundscheibe in die aktive Schicht des Funktionselementes angesehen. Eine Versiegelung des Randbereichs des Funktionselementes unterbindet die Diffusion und schafft Abhilfe, beispielsweise gemäß US 20110171443 A1 durch Aufbringen eines Klebebands, das die offene Kante der aktiven Schicht verschließt. Selbst wenn ein transparentes Klebeband für diese Versiegelung gewählt wird, so ist die versiegelte Kante des Funktionselementes trotz allem als solche erkennbar. Eine derartige Beeinträchtigung der optischen Qualität stößt im Durchsichtbereich der Scheibe lediglich auf eine sehr geringe Kundenakzeptanz. Insbesondere bei elektrisch steuerbaren Sonnenblenden, deren Unterkante im sichtbaren Bereich der Verbundscheibe liegt, ist dies ein Problem.

In DE 10 2011 003256 A1 wird eine Windschutzscheibe mit einer aktiven Verglasung als Sonnenblende ausgestattet, wobei die aktive Verglasung sich bei Anlegen einer Spannung tönt.

In WO 2017/157626 A1 wird eine Windschutzscheibe mit einem PDLC-Funktionselement als elektrisch regelbarer Sonnenblende beschrieben.

EP 0903615 A2 offenbart einen schaltbaren wellenlängenselektiven Filter, der ein Material mit einem im elektrischen Feld variablen Brechungsindex umfasst, das dispergierte Flüssigkristalltropfen enthält.

Der vorliegenden Erfindung liegt daher die Aufgabe zugrunde, eine verbesserte Verbundscheibe mit Funktionselement, die die Nachteile des Stands der Technik nicht aufweist, sowie ein Verfahren zur Herstellung der Verbundscheibe und deren Verwendung bereitzustellen.

Die Aufgabe der vorliegenden Erfindung wird durch eine Verbundscheibe mit Funktionselement gemäß dem unabhängigen Anspruch 1 gelöst. Bevorzugte Ausführungen gehen aus den Unteransprüchen hervor.

Die Erfindung betrifft eine Verbundscheibe mit Funktionselement mit elektrisch steuerbaren optischen Eigenschaften, wobei das Funktionselement in einer thermoplastischen Zwischenschicht der Verbundscheibe eingelagert ist und die optischen Eigenschaften des Funktionselementes in Abhängigkeit der angelegten Spannung regelbar sind. Das Funktionselement umfasst mindestens eine Mehrschichtfolie, die in dieser Reihenfolge flächenmäßig übereinander angeordnet eine erste Trägerfolie, eine erste Flächenelektrode, eine aktive Schicht, eine zweite Flächenelektrode und eine zweite Trägerfolie enthält. Die Flächenelektroden sind in der Regel jeweils auf der dazu benachbarten Trägerfolie aufgebracht. Die aktive Schicht des Funktionselementes umfasst eine Matrix und eine aktive Substanz, wobei erfindungsgemäß die Konzentration der aktiven Substanz in der Matrix über die Fläche des Funktionselementes variiert. Als Konzentration der aktiven Substanz wird erfindungsgemäß die mittlere Konzentration der aktiven Substanz im zu betrachtenden Abschnitt der Matrix angesehen.

Erfindungsgemäß wird demnach eine Verbundscheibe mit Funktionselement bereitgestellt, bei der sich der Grad der Änderung der optischen Eigenschaften ortsabhängig über die Fläche des Funktionselementes variieren lässt. Die nach dem Stand der Technik bekannten Funktionselemente enthalten in der Regel eine konstante Konzentration der aktiven Substanz über die Fläche des Funktionselementes. Werden beispielsweise in einer Verbundscheibe Bereiche mit elektrisch schaltbarer starker Trübung, schwacher Trübung und ohne Trübung gewünscht, so sind nach dem Stand der Technik in diesen Bereichen unterschiedliche Funktionselemente bzw. kein Funktionselement vorzusehen. Der Übergang zwischen diesen Bereichen mit unterschiedlichen Funktionselementen bzw. ohne Funktionselement ist für den Betrachter deutlich in Form einer Kante erkennbar. Das erfindungsgemäße Funktionselement kann hingegen als einzelnes Funktionselement flächig in allen drei Bereichen eingebracht werden, wobei die Konzentration der aktiven Substanz je nach gewünschter Trübung gewählt wird. Daraus ergibt sich sowohl eine höhere optische Qualität des Produktes als auch eine vereinfachte Montage der Verbundscheibe.

Das steuerbare Funktionselement umfasst eine aktive Schicht zwischen zwei Flächenelektroden. Die aktive Schicht weist die steuerbaren optischen Eigenschaften auf, welche über die an die Flächenelektroden angelegte Spannung gesteuert werden können. Die Flächenelektroden und die aktive Schicht sind typischerweise im Wesentlichen parallel zueinander angeordnet. Die Flächenelektroden können mit einer externen Spannungsquelle auf an sich bekannte Art elektrisch verbunden werden. Die elektrische Kontaktierung kann durch geeignete Verbindungskabel, beispielsweise Folienleiter realisiert werden, welche optional über sogenannte Sammelleiter (bus bars), beispielsweise Streifen eines elektrisch leitfähigen Materials oder elektrisch leitfähige Aufdrucke, mit den Flächenelektroden verbunden sind.

Bevorzugt enthalten die erste Trägerfolie und/oder die zweite Trägerfolie zumindest ein im Autoklavprozess nicht vollständig aufschmelzendes Polymer, bevorzugt Polyethylenterephthalat (PET). Besonders bevorzugt bestehen die erste und die zweite Trägerfolie aus einer PET-Folie. Die erfindungsgemäßen Trägerfolien sind bevorzugt transparent, können jedoch auch getönt sein. Die Dicke der Trägerfolien beträgt bevorzugt von 0,025 mm bis 0,400 mm, insbesondere von 0,050 mm bis 0,200 mm. Die Flächenelektroden sind bevorzugt auf einer Oberfläche der Trägerfolie angeordnet, das heißt auf genau einer der beiden Seiten der Trägerfolie (also auf deren Vorderseite oder deren Rückseite). Die Trägerfolien sind dabei im Schichtstapel der Mehrschichtfolie so ausgerichtet, dass die Flächenelektroden benachbart zur aktiven Schicht angeordnet sind. Die Folien können auch innerhalb der genannten Bereiche verschiedene Dicken und Zusammensetzungen aufweisen.

Bevorzugt sind die Trägerfolien im Bereich des gesamten Funktionselementes über sämtliche Konzentrationsbereiche hinweg als eine einzelne durchgängige Folie ausgeführt. Dadurch kann eine hohe optische Produktqualität erreicht werden. Im Gegensatz dazu bleibt in einem Funktionselement, das aus mehreren an einer Schnittkante aneinandergelegten Mehrschichtfolien erzeugt wird, die Schnittkante auch nach Lamination des Funktionselements in einer Scheibe sichtbar.

Unter elektrisch regelbaren optischen Eigenschaften werden im Sinne der Erfindung solche Eigenschaften verstanden, die stufenlos regelbar sind, aber gleichermaßen auch solche, die zwischen zwei oder mehr diskreten Zuständen geschaltet werden können.

Die Flächenelektroden sind bevorzugt als transparente, elektrisch leitfähige Schichten ausgestaltet. Die Flächenelektroden enthalten bevorzugt zumindest ein Metall, eine Metalllegierung oder ein transparentes leitfähiges Oxid (transparent conducting oxide, TCO). Die Flächenelektroden können beispielsweise Silber, Gold, Kupfer, Nickel, Chrom, Wolfram, Indium-Zinnoxid (ITO), Gallium-dotiertes oder Aluminium-dotiertes Zinkoxid und / oder Fluordotiertes oder Antimon-dotiertes Zinnoxid enthalten. Die Flächenelektroden weisen bevorzugt eine Dicke von 10 nm bis 2 µm auf, besonders bevorzugt von 20 nm bis 1 µm, ganz besonders bevorzugt von 30 nm bis 500 nm.

In einer möglichen Ausführungsform können die Flächenelektroden in ihrer flächigen Ausdehnung auf Bereiche des Funktionselementes begrenzt werden, in denen ein Schaltvorgang des Funktionselementes erwünscht ist. Insbesondere in Bereichen, in denen die Konzentration der aktiven Substanz gleich null ist, kann somit auf die erste und/oder zweite Flächenelektrode, bevorzugt auf beide Flächenelektroden, verzichtet werden. Dadurch ergibt sich eine vorteilhafte Senkung der Produktionskosten. Zusätzlich dazu ist eine größere Flexibilität in der Materialwahl der Flächenelektroden möglich. Soll eine Flächenelektrode beispielsweise innerhalb des zentralen Sichtfeldes einer Windschutzscheibe angebracht werden, so gelten gesetzliche Mindestanforderungen an die Transparenz und optische Qualität der Scheibe in diesem Bereich. Befinden sich die Flächenelektroden lediglich außerhalb dieses zentralen Sichtfeldes, so sind die Anforderungen entsprechend geringer. Somit können auch kostengünstigere Schichtsysteme als Flächenelektroden eingesetzt werden, deren optische Qualität leicht verschlechtert ist.

Das Funktionselement kann außer der aktiven Schicht und den Flächenelektroden weitere an sich bekannte Schichten aufweisen, beispielsweise Barriereschichten, Blockerschichten, Antireflexionsschichten, Schutzschichten und/oder Glättungsschichten.

Bevorzugt enthält die aktive Schicht des Funktionselementes mehrere Konzentrationsbereiche, die sich in der Konzentration der aktiven Substanz unterscheiden.

Auch hier wird die mittlere Konzentration der aktiven Substanz innerhalb des zu betrachtenden Bereiches verwendet. Innerhalb eines Konzentrationsbereiches kann die Konzentration der aktiven Substanz in der Matrix konstant sein, wobei die lokale Konzentration an einzelnen Punkten innerhalb des Bereichs der mittleren Konzentration des Bereichs entspricht. In einer weiteren Ausführungsform kann die Konzentration innerhalb eines Konzentrationsbereichs auch variabel sein, wobei die lokale Konzentration von der mittleren Konzentration abweichen und die mittlere Konzentration als arithmetischer Mittelwert der lokalen Konzentration gesehen werden kann. Ein Konzentrationsbereich konstanter Konzentration ist bezüglich seiner Herstellung einfacher zu gestalten als ein Konzentrationsbereich mit variablem Verlauf. Ein variabler Verlauf kann allerdings optisch besonders ansprechend wirken.

Bevorzugt umfasst die aktive Schicht mindestens einen ersten Konzentrationsbereich mit einer Ausgangskonzentration c₀ der aktiven Substanz und einen zweiten Konzentrationsbereich, in dem die Konzentration der aktiven Substanz gleich null ist. In dieser Ausführungsform ist der Bereich mit einer Konzentration c₀ ein Bereich, in dem eine elektrisch steuerbare Änderung der optischen Eigenschaften erwünscht ist. Bei Lamination des Funktionselementes in einer Windschutzscheibe kann dieser Bereich beispielsweise als elektrisch schaltbare Sonnenblende genutzt werden. Im zweiten Konzentrationsbereich findet keine elektrisch steuerbare Änderung der optischen Eigenschaften statt. Dieser Bereich des Funktionselementes erstreckt sich beispielsweise im Durchsichtbereich einer Windschutzscheibe. Ein derartiges Funktionselement kann somit großflächig in einer Verbundscheibe eingebracht werden, wobei die aktive Substanz nur in Bereichen der Matrix eingebracht ist, in denen eine elektrisch steuerbare Änderung der optischen Eigenschaften erwünscht ist. Dies ist besonders vorteilhaft, da auf diese Weise keinerlei optisch störende Kante zwischen den Bereichen sichtbar ist. Ferner kann auf zusätzliche Folienelemente, mit denen nach dem Stand der Technik die Dickenunterschiede in einem Durchsichtbereich ohne Funktionselement ausgeglichen werden müssten, verzichtet werden.

Zwischen dem ersten Konzentrationsbereich und dem zweiten Konzentrationsbereich kann ein dritter Konzentrationsbereich vorgesehen werden. Der dritte Konzentrationsbereich grenzt dabei an einer Seite an den ersten Konzentrationsbereich und an einer anderen Seite an den zweiten Konzentrationsbereich. Im dritten Konzentrationsbereich liegt die Konzentration der aktiven Substanz in der Matrix in diesem Fall zwischen der Konzentration im ersten Konzentrationsbereich und der Konzentration im zweiten Konzentrationsbereich. Auf diese Weise wird ein optisch ansprechender Übergang zwischen einem ersten Konzentrationsbereich höherer Konzentration und einem zweiten Konzentrationsbereich niedrigerer Konzentration geschaffen.

In einer bevorzugten Ausführungsform kann auch auf einen zweiten Konzentrationsbereich mit einer Konzentration der aktiven Substanz von c = 0 verzichtet werden. Dabei liegt im gesamten Bereich des Funktionselementes aktive Substanz vor, wobei die Konzentration über das Funktionselement variiert. Eine derartige Ausführungsform ist sehr gut für Anwendungen in Dachscheiben geeignet, in denen kein Sichtbereich mit hoher Lichttransmission benötigt wird, sondern beispielsweise im gesamten Scheibenbereich eine Sonnenblende erwünscht ist.

In einer weiteren bevorzugten Ausführungsform weist der erste Konzentrationsbereich eine im Wesentlichen über den ersten Konzentrationsbereich konstante Ausgangskonzentration c₀ auf, während im zweiten Konzentrationsbereich die Konzentration der aktiven Substanz null beträgt. Im dritten Konzentrationsbereich, der zwischen diesen Bereichen liegt, kann sowohl eine konstante Konzentration mit c<c₀ vorliegen, oder auch ein Konzentrationsverlauf angewandt werden. Ein Konzentrationsverlauf wirkt dabei optisch besonders ansprechend. Dabei entspricht die lokale Konzentration an der, dem ersten Konzentrationsbereich benachbarten, Seitenkante des dritten Konzentrationsbereichs der im ersten Konzentrationsbereich vorliegenden Ausgangskonzentration c₀. Über den dritten Konzentrationsbereich sinkt die Konzentration im weiteren Verlauf, bis sie an der dem zweiten Konzentrationsbereich benachbarten Seitenkante einen Wert von c = 0 erreicht. Der dritte Konzentrationsbereich schafft damit einen optisch ansprechenden fließenden Übergang zwischen erstem und zweitem Konzentrationsbereich.

Die Ausgangskonzentration c₀ der aktiven Substanz im ersten Konzentrationsbereich ist hinsichtlich einer optimalen Schaltbarkeit und der gewünschten Änderung der optischen Eigenschaften optimiert. Dazu kann die Ausgangskonzentration gemäß den bei im Stand der Technik bekannten Funktionselementen üblichen Konzentrationen der aktiven Substanz gewählt werden. Im dritten Konzentrationsbereich liegt die Konzentration der aktiven Substanz bevorzugt zwischen 20 % der Ausgangskonzentration und 70 % der Ausgangskonzentration, besonders bevorzugt bei 40 % bis 60 % der Ausgangskonzentration. Dadurch kann ein optisch ansprechender Übergang zwischen dem ersten Konzentrationsbereich mit der Ausgangskonzentration und dem zweiten Konzentrationsbereich mit c = 0 erreicht werden.

Zwischen dem ersten Konzentrationsbereich und dem dritten Konzentrationsbereich, sowie zwischen den dritten Konzentrationsbereich und dem zweiten Konzentrationsbereich, können beliebig viele weitere Konzentrationsbereiche angeordnet werden, deren mittlere Konzentration zwischen den Konzentrationen der benachbarten Konzentrationsbereiche liegt. Damit kann ein verbesserter optisch fließender Übergang zwischen den Bereichen geschaffen werden.

In einer vorteilhaften Ausgestaltung ist das Funktionselement ein PDLC-Funktionselement (*polymer dispersed liquid crystal*). Die aktive Schicht eines PDLC-Funktionselements enthält Flüssigkristalle, welche in eine Polymermatrix eingelagert sind. Wird an die Flächenelektroden keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Ein solches Funktionselement ist beispielsweise aus DE 102008026339 A1 bekannt. Die aktive Substanz eines PDLC-Funktionselementes sind demnach Flüssigkristalle, die in Form von Flüssigkristalltröpfchen in einer Matrix, in diesem Fall einer polymeren Matrix, dispergiert sind. Die Polymermatrix sowie die darin dispergierten Flüssigkristalltröpfchen bilden gemeinsam die aktive Schicht.

In weiteren möglichen Ausgestaltungen ist die aktive Schicht eine SPD-, eine elektrochrome oder eine elektrolumineszente Schicht.

Ein SPD-Funktionselement (*suspended particle device*) enthält eine aktive Schicht umfassend suspendierte Partikel, wobei die Absorption von Licht durch die aktive Schicht mittels Anlegen einer Spannung an die Flächenelektroden veränderbar ist. Die Absorptionsänderung beruht auf der Ausrichtung der stäbchenartigen Partikel im elektrischen Feld bei angelegter elektrischer Spannung. SPD-Funktionselemente sind beispielsweise aus EP 0876608 B1 und WO 2011033313 A1 bekannt.

Bei einem elektrochromen Funktionselement ist die aktive Schicht des Funktionselements eine elektrochemisch aktive Schicht. Die Transmission von sichtbarem Licht ist vom

Einlagerungsgrad von Ionen in die aktive Schicht abhängig, wobei die Ionen beispielsweise durch eine lonenspeicherschicht zwischen aktiver Schicht und einer Flächenelektrode bereitgestellt werden. Die Transmission kann durch die an die Flächenelektroden angelegte Spannung, welche eine Wanderung der Ionen hervorruft, beeinflusst werden. Geeignete funktionelle Schichten enthalten beispielsweise zumindest Wolframoxid oder Vanadiumoxid. Elektrochrome Funktionselemente sind beispielsweise aus WO 2012007334 A1, US 20120026573 A1, WO 2010147494 A1 und EP 1862849 A1 bekannt.

Bei elektrolumineszenten Funktionselementen enthält die aktive Schicht elektrolumineszente Materialen, insbesondere organische elektrolumineszente Materialen, deren Lumineszenz durch Anlegen einer Spannung angeregt wird. Elektrolumineszente Funktionselemente sind beispielsweise aus US 2004227462 A1 und WO 2010112789 A2 bekannt. Das elektrolumineszente Funktionselement kann als einfache Lichtquelle verwendet werden, oder als Display mit dem beliebige Darstellungen gezeigt werden können.

In einer bevorzugten Ausführungsform der Erfindung ist das Funktionselement ein PDLC-Funktionselement, wobei die Konzentration der aktiven Substanz über die Anzahl der Flüssigkristalltröpfchen variiert wird. Dies ist vorteilhaft, da auf diese Weise bei Herstellung der verschiedenen Konzentrationsbereiche lediglich eine zusätzliche Menge Matrixsubstanz beizufügen ist um die gewünschte Konzentration der aktiven Substanz einzustellen. In einer alternativen Ausführungsform kann die Konzentration der aktiven Substanz durch Variation der Größe der Flüssigkristalltröpfchen angepasst werden.

In der erfindungsgemäßen Verbundscheibe ist das Funktionselement in die Zwischenschicht der Verbundscheibe eingelagert. Die Zwischenschicht verbindet dabei die erste Scheibe und die zweite Scheibe der Verbundscheibe. Das regelbare Funktionselement umfasst dabei, wie bereits beschrieben, die aktive Schicht, die regelbare optische Eigenschaften aufweist. Die aktive Schicht enthält dazu eine aktive Substanz, deren optische Eigenschaften in Abhängigkeit der am Funktionselement anliegenden Spannung veränderlich sind. Die aktive Substanz ist in einer Matrix eingebracht, wobei die Konzentration der aktiven Substanz innerhalb der Matrix über die Fläche des Funktionselementes variiert.

Dies hat den Vorteil, dass die Konzentration der aktiven Substanz ortsabhängig zum gewünschten Grad der Änderung der optischen Eigenschaften des Funktionselementes gewählt werden kann. Bei einem Funktionselement, das zwischen einem transparenten und einem intransparenten Zustand schaltbar ist, wird beispielsweise die Konzentration in Bereichen, die in jeglichem Schaltzustand eine erhöhte Transparenz aufweisen sollen, niedriger gewählt als in Bereichen, die im intransparenten Schaltzustand möglichst undurchsichtig sein sollen. Die Erfindung ermöglicht demnach mittels eines einzelnen durchgängigen Funktionselementes in der Verbundscheibe eine ortsabhängig modifizierbare Trübung. Nach dem Stand der Technik werden Funktionselemente lediglich in den Bereichen einer Verbundscheibe eingesetzt, in denen eine entsprechende elektrische Steuerung der optischen Eigenschaften erwünscht ist. In einem intransparent geschalteten Zustand eines solchen Funktionselementes erscheint der Übergang zwischen Bereichen mit Funktionselement und daran angrenzender thermoplastischer Zwischenschicht als störende Kante. Selbst im transparent geschalteten Zustand des Funktionselementes ist diese Kante eindeutig wahrnehmbar. Darüber hinaus ist eine Randversiegelung des Funktionselementes notwendig, die ebenfalls deutlich erkennbar ist. Die Erfindung schafft hier Abhilfe, da ein Funktionselement flächig über einen Großteil der Scheibe eingebracht werden kann und somit im Durchsichtbereich der Scheibe keinerlei optische Beeinträchtigungen auftreten. Zusätzlich dazu können auch Übergangsbereiche zwischen einem möglichst intransparent schaltbaren Bereich und einem unabhängig vom Schaltzustand transparenten Bereich optisch ansprechend gestaltet werden. In einem solchen Übergangsbereich kann beispielsweise ein dritter Konzentrationsbereich des Funktionselementes vorliegen, in dem die Konzentration der aktiven Substanz vom intransparent schaltbaren Bereich zum transparenten Bereich abnimmt.

Die Flächenelektroden und die aktive Schicht des Funktionselementes sind typischerweise im Wesentlichen parallel zur Innenscheibe und Außenscheibe der Verbundscheibe angeordnet. Die Flächenelektroden sind mit einer externen Spannungsquelle auf an sich bekannte Art elektrisch verbunden. Die elektrische Kontaktierung ist durch geeignete Verbindungskabel, beispielsweise Folienleiter realisiert, welche bevorzugt über Sammelleiter mit den Flächenelektroden verbunden sind.

Bevorzugt ist in die erfindungsgemäße Verbundscheibe ein Funktionselement mit variabler Konzentration der aktiven Substanz so eingelegt, dass die Konzentration der aktiven Substanz von einer Scheibenkante der Verbundscheibe zu einer dieser gegenüberliegenden Scheibenkante der Verbundscheibe abnimmt. Dies ist beispielsweise vorteilhaft, wenn in einem bestimmten Bereich der Scheibe ein Blendschutz geschaffen werden soll während ein anderer Bereich der Scheibe eine hohe Transparenz aufweist. Der entsprechende Konzentrationsgradient zwischen den gegenüberliegenden Scheibenkanten kann kontinuierlich oder auch diskontinuierlich verlaufen. So können beispielsweise mehrere Konzentrationsbereiche mit abnehmender Konzentration aufeinanderfolgen, wobei innerhalb dieser Konzentrationsbereiche jeweils eine konstante Konzentration vorliegt. In einer weiteren Ausführungsform können auch ein oder mehrere dieser Konzentrationsbereiche selbst einen variablen, in einer Richtung abfallenden, Konzentrationsverlauf besitzen.

Die Verbundscheibe kann beispielsweise die Windschutzscheibe oder die Dachscheibe eines Fahrzeugs oder eine andere Fahrzeugverglasung sein, beispielsweise eine Trennscheibe in einem Fahrzeug, bevorzugt in einem Schienenfahrzeug oder einem Bus. Alternativ kann die Verbundscheibe eine Architekturverglasung, beispielsweise in einer Außenfassade eines Gebäudes oder eine Trennscheibe im Innern eines Gebäudes sein.

Die Begriffe Außenscheibe und Innenscheibe beschreiben willkürlich zwei verschiedene Scheiben. Insbesondere kann die Außenscheibe als eine erste Scheibe und die Innenscheibe als eine zweite Scheibe bezeichnet werden.

Ist die Verbundscheibe dafür vorgesehen, in einer Fensteröffnung eines Fahrzeugs oder eines Gebäudes einen Innenraum gegenüber der äußeren Umgebung abzutrennen, so wird mit Innenscheibe im Sinne der Erfindung die dem Innenraum (Fahrzeuginnenraum) zugewandte Scheibe (zweite Scheibe) bezeichnet. Mit Außenscheibe wird die der äußeren Umgebung zugewandte Scheibe (erste Scheibe) bezeichnet. Die Erfindung ist aber darauf nicht eingeschränkt.

Die erfindungsgemäße Verbundscheibe enthält ein Funktionselement mit elektrisch steuerbaren optischen Eigenschaften, das zwischen einer ersten thermoplastischen Verbundfolie und einer zweiten thermoplastischen Verbundfolie zumindest abschnittsweise angeordnet ist. Die erste und zweite thermoplastische Verbundfolie weisen üblicherweise dieselben Abmessungen wie die erste und die zweite Scheibe auf.

In einer vorteilhaften Ausführungsform ist die erfindungsgemäße Verbundscheibe eine Windschutzscheibe eines Kraftfahrzeugs. Diese umfasst eine Motorkante, die in Einbaulage der Verbundscheibe in der Fahrzeugkarosserie der Motorhaube benachbart ist und eine Dachkante, die in Einbaulage an das Fahrzeugdach grenzt. Motorkante und Dachkante bilden dabei zwei einander gegenüberliegende Scheibenkanten. Zwischen Motorkante und Dachkante verlaufen zwei einander gegenüberliegende Seitenkanten, die in Einbaulage der Windschutzscheibe an die sogenannten A-Säulen der Karosserie grenzen. Der erste Konzentrationsbereich mit einer Ausgangskonzentration c₀ der aktiven Substanz ist gemäß dieser Ausführungsform benachbart zur Dachkante angeordnet, während ein zweiter Konzentrationsbereich, in dem die Konzentration der aktiven Substanz gleich null ist, benachbart zur Motorkante angeordnet ist. Eine derartige Ausführungsform ist besonders vorteilhaft als Windschutzscheibe mit Funktionselement als elektrisch steuerbarer Sonnenblende. Der erste Konzentrationsbereich dient dabei als schaltbare Sonnenblende, wobei die Ausgangskonzentration c₀ so gewählt wird, dass eine gute Abschattung gewährleistet wird. Der zweite Konzentrationsbereich entspricht dem Durchsichtbereich der Windschutzscheibe, wobei in diesem Bereich keine aktive Substanz vorhanden ist und somit unabhängig vom Schaltzustand eine optimale Transparenz vorliegt. Optional befindet sich zwischen erstem und zweitem Konzentrationsbereich ein dritter Konzentrationsbereich, der wie bereits beschrieben einen optisch ansprechenden Übergang der beiden Konzentrationsbereiche bewirkt.

Windschutzscheiben weisen ein zentrales Sichtfeld auf, an dessen optische Qualität hohe Anforderungen gestellt werden. Das zentrale Sichtfeld muss eine hohe Lichttransmission aufweisen (typischerweise größer als 70%). Das besagte zentrale Sichtfeld ist insbesondere dasjenige Sichtfeld, das vom Fachmann als Sichtfeld B, Sichtbereich B oder Zone B bezeichnet wird. Das Sichtfeld B und seine technischen Anforderungen sind in der Regelung Nr. 43 der Wirtschaftskommission der Vereinten Nationen für Europa (UN/ECE) (ECE-R43, "Einheitliche Bedingungen für die Genehmigung der Sicherheitsverglasungswerkstoffe und ihres Einbaus in Fahrzeuge") festgelegt. Dort ist das Sichtfeld B in Anhang 18 definiert.

Die erfindungsgemäße Windschutzscheibe enthält ein Funktionselement mit elektrisch regelbaren optischen Eigenschaften, wobei der erste Konzentrationsbereich mit einer Ausgangskonzentration c₀ der aktiven Substanz oberhalb des zentralen Sichtfelds (Sichtfeld B) angeordnet ist. Das bedeutet, dass der Bereich des Funktionselementes, in dem die maximale Änderung der optischen Eigenschaften eintritt, im Bereich zwischen dem zentralen Sichtfeld und der Oberkante der Windschutzscheibe angeordnet ist. Der erste Konzentrationsbereich muss nicht diesen gesamten Scheibenbereich abdecken, ist aber vollständig innerhalb dieses Bereichs positioniert und ragt nicht in das zentrale Sichtfeld hinein. Anders ausgedrückt weist der erste Konzentrationsbereich des Funktionselementes einen geringeren Abstand zur Oberkante der Windschutzscheibe auf als der zentrale Sichtbereich. Somit wird die Transmission des zentralen Sichtfelds nicht durch den ersten Konzentrationsbereich des Funktionselementes beeinträchtigt, welcher an einer ähnlichen Stelle positioniert ist wie eine klassische mechanische Sonnenblende im heruntergeklappten Zustand. Im Sichtfeld der Windschutzscheibe ist ein zweiter Konzentrationsbereich des Funktionselementes angeordnet, in dem die Konzentration der aktiven Substanz null beträgt. Im zentralen Sichtfeld der Windschutzscheibe wird demnach die Transmission nicht oder nur unwesentlich durch das Funktionselement beeinflusst. Im intransparent geschalteten Zustand des Funktionselementes findet keinerlei Änderung der optischen Eigenschaften im Bereich des Sichtfeldes mit zweitem Konzentrationsbereich statt. Optional kann sich auch in dieser Ausführungsform ein dritter Konzentrationsbereich zwischen erstem und zweitem Konzentrationsbereich befinden. Dieser kann sich entweder vollständig oberhalb des zentralen Sichtfeldes befinden oder auch abschnittsweise in dieses hineinragen.

In einer Ausgestaltung der Erfindung ist das Funktionselement der erfindungsgemäßen Verbundscheibe durch Trennlinien, auch als Isolierungslinien bezeichnet, in Segmente aufgeteilt. Die Trennlinien sind insbesondere in die Flächenelektroden eingebracht sein, so dass die Segmente der Flächenelektrode elektrisch voneinander isoliert sind. Mindestens eine der Flächenelektroden weist dabei mindestens eine Trennlinie auf, die die Flächenelektrode in mindestens zwei Segmente unterteilt, deren elektrisch steuerbare optische Eigenschaften unabhängig voneinander schaltbar sind. Die einzelnen Segmente sind dazu unabhängig voneinander mit der Spannungsquelle verbunden, so dass sie separat angesteuert werden können. So können beispielsweise verschiedene Bereiche der Sonnenblende unabhängig geschaltet werden. Besonders bevorzugt sind die Trennlinien und die Segmente bei einer Windschutzscheibe mit Sonnenblende in Einbaulage horizontal angeordnet. Damit kann die Höhe der Sonnenblende vom Benutzer geregelt werden. Der Begriff "horizontal" ist hier breit auszulegen und bezeichnet eine Ausbreitungsrichtung, die zwischen den Seitenkanten der Windschutzscheibe verläuft. Die Trennlinien müssen nicht notwendigerweise gerade sein, sondern können auch leicht gebogen sein, bevorzugt angepasst an eine eventuelle Biegung der Oberkante der Windschutzscheibe, insbesondere im Wesentlichen parallel zur Oberkante der Windschutzscheibe. Vertikale Trennlinien sind natürlich auch denkbar.

Die Segmente können grundsätzlich vollkommen unabhängig von der Anordnung der Konzentrationsbereiche platziert werden. In einer möglichen Ausführungsform befinden sich mehrere Segmente im Bereich des ersten Konzentrationsbereichs mit einer Ausgangskonzentration c₀ der aktiven Substanz, wodurch beispielsweise die elektrisch regelbare Sonnenblende einer Windschutzscheibe je nach Sonnenstand variabel eingestellt werden kann. Der erste Konzentrationsbereich stellt dabei den Bereich der Sonnenblende, in dem ein vollständiger Blendschutz erreicht werden soll. Im Fall des zweiten Konzentrationsbereichs ohne aktive Substanz ist es prinzipiell ausreichend ein einzelnes Segment vorzusehen, da in diesem Bereich keine Änderung der optischen Eigenschaften erwünscht ist und auch bei Anlegen einer Spannung nicht erfolgt. Im zweiten Konzentrationsbereich müssen aus diesem Grund auch keine Sammelleiter vorgesehen werden. Der zweite Konzentrationsbereich kann auch gemeinsam mit einem Abschnitt des ersten oder optionalen dritten Konzentrationsbereichs zu einem Segment zusammengefasst werden, wobei sich die Sammelleiter optional auch im Bereich des zweiten Konzentrationsbereichs erstrecken können.

Die Trennlinien weisen beispielsweise eine Breite von 5 µm bis 500 µm, insbesondere 20 µm bis 200 µm auf. Die Breite der Segmente, also der Abstand benachbarten Trennlinien kann vom Fachmann gemäß den Anforderungen im Einzelfall geeignet gewählt werden.

Die Trennlinien können durch Laserablation, mechanisches Schneiden oder Ätzen während der Herstellung des Funktionselements eingebracht werden. Bereits laminierte Mehrschichtfolien können auch nachträglich noch mittels Laserablation segmentiert werden.

Das Funktionselement ist über eine thermoplastische Zwischenschicht zwischen der Innenscheibe und der Außenscheibe der Verbundscheibe eingebunden. Die Zwischenschicht umfasst dabei bevorzugt eine erste thermoplastische Verbundfolie, die das Funktionselement mit der Innenscheibe verbindet, und eine zweite thermoplastische Verbundfolie, die das Funktionselement mit der Außenscheibe verbindet. Typischerweise wird die thermoplastische Zwischenschicht durch mindestens die erste und die zweite thermoplastische Verbundfolie gebildet, die flächig aufeinander angeordnet werden und miteinander laminiert werden, wobei das Funktionselement zwischen die beiden Schichten eingelegt wird. Die mit dem Funktionselement überlappenden Bereiche der Verbundfolien bilden dann die Bereiche, welche das Funktionselement mit den Scheiben verbinden. In anderen Bereichen der Scheibe, wo die thermoplastischen Verbundfolien direkten Kontakt zueinander haben, können sie beim Laminieren derart verschmelzen, dass die beiden ursprünglichen Schichten unter Umständen nicht mehr erkennbar sind und stattdessen eine homogene Zwischenschicht vorliegt.

Eine thermoplastische Verbundfolie kann beispielsweise durch eine einzige thermoplastische Folie ausgebildet werden. Eine thermoplastische Verbundfolie kann auch aus Abschnitten unterschiedlicher thermoplastischer Folien gebildet werden, deren Seitenkanten aneinandergesetzt sind. Zusätzlich zu einer ersten thermoplastischen Verbundfolie oder einer zweiten thermoplastischen Verbundfolie können auch weitere thermoplastische Verbundfolien vorhanden sein. Diese können bei Bedarf auch zur Einbettung weiterer Folien umfassend funktionelle Schichten, beispielsweise infrarotreflektierender Schichten oder akustisch dämpfender Schichten, genutzt werden.

In einer möglichen Ausgestaltung der Erfindung ist das Funktionselement, genauer die Seitenkanten des Funktionselements umlaufend von einer thermoplastischen Rahmenfolie umgeben. Die thermoplastische Rahmenfolie weist etwa die gleiche Dicke auf wie das Funktionselement. Nach dem Stand der Technik werden lokale Dickenunterschiede der Verbundscheibe, die durch kleinflächige örtlich begrenzte Funktionselemente eingebracht werden durch eine solche Rahmenfolie kompensiert, so dass Glasbruch beim Laminieren vermieden werden kann. Das erfindungsgemäße großflächig und auch in transparenten Bereichen der Verbundscheibe einsetzbare Funktionselement führt zu einer vorteilhaften Reduzierung der Scheibenbereiche mit thermoplastischer Rahmenfolie. In einer bevorzugten Ausführungsform wird auf eine thermoplastische Rahmenfolie vollständig verzichtet, wobei das Funktionselement einen Großteil der Scheibenfläche einnimmt und der Flächenanteil der Bereiche geringerer Dicke ohne Funktionselement so gering ist, dass eine Kompensation nicht notwendig ist. Bevorzugt nimmt das Funktionselement mindestens 95 % der Fläche der Verbundscheibe ein. Besonders bevorzugt nimmt das Funktionselement den Durchsichtbereich einer Windschutzscheibe mit ebensolchem Funktionselement vollständig ein. Eine im Sichtbereich optisch störende umlaufende Kante des Funktionselementes wird dabei durch den üblicherweise im Randbereich der Windschutzscheibe vorhandenen opaken Abdeckdruck kaschiert.

In einer weiteren möglichen Ausgestaltung der Erfindung wird eine Rahmenfolie verwendet. Dies kann beispielsweise bei Funktionselementen besonders großer Dicke sinnvoll sein. Die Rahmenfolie ist rahmenartig ausgebildet mit einer Aussparung, in welche das Funktionselement eingelegt wird. Die thermoplastische Rahmenfolie kann durch eine thermoplastische Folie gebildet werden, in welche die Aussparung durch Ausschneiden eingebracht worden ist. Alternativ kann die thermoplastische Rahmenfolie auch aus mehreren Folienabschnitten um das Funktionselement zusammengesetzt werden. Die Zwischenschicht ist somit in einer bevorzugten Ausführungsform aus insgesamt mindestens drei flächig aufeinander angeordneten thermoplastischen Verbundfolien gebildet, wobei die Rahmenfolie als mittlere Schicht eine Aussparung ausweist, in der das Funktionselement angeordnet ist. Bei der Herstellung wird die thermoplastische Rahmenfolie zwischen der ersten und der zweiten thermoplastischen Verbundfolie angeordnet, wobei die Seitenkanten aller thermoplastischen Folien bevorzugt in Deckung befindlich sind. Die thermoplastische Rahmenfolie weist bevorzugt etwa die gleiche Dicke auf wie das Funktionselement. Dadurch wird der lokale Dickenunterschied der Verbundscheibe, der durch das örtlich begrenzte Funktionselement eingebracht wird, kompensiert, so dass Glasbruch beim Laminieren vermieden werden kann.

Selbst wenn eine thermoplastische Rahmenfolie verwendet wird, so weist die erfindungsgemäße Verbundscheibe dennoch eine wesentlich höhere optische Qualität auf als die im Stand der Technik bekannten Verbundscheiben mit Funktionselement. Nach dem Stand der Technik ist die Unterkante eines lokal eingebrachten Funktionselements als Sonnenblende einer Windschutzscheibe typischerweise als optisch deutlich erkennbare Kante sichtbar, da im Sichtbereich der Windschutzscheibe kein Funktionselement, sondern die thermoplastische Rahmenfolie zugegen ist. Erfindungsgemäß erstreckt sich das Funktionselement in den Durchsichtbereich der Scheibe, so dass ein optisch ansprechendes Erscheinungsbild ohne störende Kante erreicht wird. Die Rahmenfolie wird allenfalls im Randbereich der Scheibe, der von einem opaken Abdeckdruck verdeckt ist, eingesetzt.

Optional wird die umlaufende Kante des Funktionselementes vollständig oder teilweise mit einer Abdichtung versehen. Diese kann beispielsweise in Form eines Klebebands um die offene Kante des Funktionselementes gelegt werden oder auch in Form von Sperrfolien ausgeführt sein, die im Randbereich des Funktionselementes ober- und unterhalb des Funktionselementes auf dieses aufgelegt werden und die Kante umschließen. Die Sperrfolien umfassen dabei ein weichmacherfreies Material, beispielsweise weichmacherfreies PVB oder PET. Die Abdichtung verhindert das Eindiffundieren von Weichmachern aus den thermoplastischen Verbundfolien in die aktive Schicht des Funktionselementes. Auf eine Abdichtung kann an Kantenabschnitten des Funktionselementes verzichtet werden, an denen die Konzentration der aktiven Substanz gleich null ist. Dies stellt einen Vorteil der Erfindung dar.

Bevorzugt ist zumindest der Bereich der ersten und/oder der zweiten thermoplastischen Verbundfolie in dem der erste Konzentrationsbereich des Funktionselementes liegt, getönt oder gefärbt. Die Transmission dieses Bereichs im sichtbaren Spektralbereich ist also herabgesetzt gegenüber einer nicht getönten oder gefärbten Schicht. Der getönte/gefärbte Bereich der thermoplastischen Verbundfolien erniedrigt somit die Transmission der Windschutzscheibe im Bereich der Sonnenblende. Insbesondere wird der ästhetische Eindruck des Funktionselements verbessert, weil die Tönung zu einem neutraleren Erscheinungsbild führt, das auf den Betrachter angenehmer wirkt. Die Tönung erstreckt sich bevorzugt im Bereich des ersten Konzentrationsbereichs und sofern vorhanden dritten Konzentrationsbereichs, wobei die Tönung auch in einen Teilbereich des zweiten Konzentrationsbereichs ohne aktive Substanz hineinragen kann.

Der getönte oder gefärbte Bereich der thermoplastischen Zwischenschicht weist bevorzugt eine Transmission im sichtbaren Spektralbereich von 10 % bis 50 % auf, besonders bevorzugt von 20% bis 40%. Damit werden besonders gute Ergebnisse erreicht hinsichtlich Blendschutz und optischem Erscheinungsbild.

Der getönte oder gefärbte Bereich kann homogen gefärbt oder getönt sein, das heißt eine ortsunabhängige Transmission aufweisen. Die Tönung oder Färbung kann aber auch inhomogenen sein, insbesondere kann ein Transmissionsverlauf realisiert sein. In einer Ausgestaltung nimmt der Transmissionsgrad im getönten oder gefärbten Bereich zumindest abschnittsweise mit steigendem Abstand zur Oberkante ab. So können scharfe Kanten des getönten oder gefärbten Bereichs vermieden werden, so dass der Übergang von einem als Sonnenblende verwendeten PDLC-Funktionselement in den transparenten Bereich der Windschutzscheibe graduell verläuft, was ästhetisch ansprechender aussieht.

In einer vorteilhaften Ausgestaltung entspricht die erste Scheibe der Außenscheibe und der Bereich der ersten thermoplastischen Verbundfolie, also der Bereich zwischen dem Funktionselement und der Außenscheibe ist abschnittsweise im Bereich des ersten und optionalen dritten Konzentrationsbereichs getönt. Dies bewirkt einen besonders ästhetischen Eindruck in Draufsicht auf die Außenscheibe. Der Bereich der zweiten thermoplastischen Verbundfolie zwischen Funktionselement und Innenscheibe (zweiter Scheibe) kann optional zusätzlich gefärbt oder getönt sein.

Die thermoplastische Zwischenschicht, umfassend die erste und die zweite thermoplastische Verbundfolie und etwaige weitere polymere Folien, sind im zentralen Sichtfeld einer Windschutzscheibe nicht getönt oder gefärbt, sondern klar und transparent. Dadurch wird sichergestellt, dass die Durchsicht durch das zentrale Sichtfeld nicht eingeschränkt wird, so dass die Scheibe als Windschutzscheibe verwendet werden kann. Unter einer transparenten thermoplastischen Verbundfolie wird eine Schicht mit einer Lichttransmission im sichtbaren Spektralbereich von mindestens 70 % bevorzugt mindestens 80% bezeichnet. Die transparente Zwischenschicht liegt zumindest im Sichtfeld A, bevorzugt auch im Sichtfeld B nach ECE-R43 vor.

Handelt es sich bei der erfindungsgemäßen Verbundscheibe um eine Windschutzscheibe mit Sonnenblende, so werden die Oberkante und die Seitenkanten des Funktionselements in Durchsicht durch die Scheibe bevorzugt von einem opaken Abdeckdruck verdeckt. Windschutzscheiben weisen typischerweise einen umlaufenden peripheren Abdeckdruck aus einer opaken Emaille auf, der insbesondere dazu dient, den zum Einbau der Windschutzscheibe verwendete Kleber vor UV-Strahlung zu schützen und optisch zu verdecken. Dieser periphere Abdeckdruck wird bevorzugt dazu verwendet, auch die Oberkante und die Seitenkante des Funktionselementes zu verdecken, sowie die erforderlichen elektrischen Anschlüsse. Die Sonnenblende ist dann vorteilhaft ins Erscheinungsbild der Windschutzscheibe integriert und lediglich die Unterkante ist potentiell vom Betrachter zu erkennen. Bevorzugt weist sowohl die Außenscheibe als auch die Innenscheibe einen Abdeckdruck auf, so dass die Durchsicht von beiden Seiten gehindert wird.

Das Funktionselement kann auch Aussparungen oder Löcher aufweisen, etwa im Bereich sogenannter Sensorfenster oder Kamerafenster. Diese Bereiche sind dafür vorgesehen, mit Sensoren oder Kameras ausgestattet zu werden, deren Funktion durch ein regelbares Funktionselement im Strahlengang beeinträchtigt werden würde, beispielsweise Regensensoren.

Das Funktionselement (oder die Gesamtheit der Funktionselemente im vorstehend beschriebenen Fall von mehreren Funktionselementen) ist bevorzugt über die gesamte Breite der Windschutzscheibe angeordnet, abzüglich eines beidseitigen Randbereichs mit einer Breite von beispielsweise 2 mm bis 20 mm. Auch zur Oberkante weist das Funktionselement bevorzugt einen Abstand von beispielsweise 2 mm bis 20 mm auf. Das Funktionselement ist so innerhalb der Zwischenschicht eingekapselt und vor Kontakt mit der umgebenden Atmosphäre und Korrosion geschützt.

Die elektrische Steuerung des Funktionselementes erfolgt beispielsweise mittels Schaltern, Dreh- oder Schiebereglern, die in den Armaturen des Fahrzeugs integriert sind. Es kann aber auch eine Schaltfläche zur Reglung in die Windschutzscheibe und/oder in die Dachfläche eines Kraftfahrzeugs integriert sein, beispielsweise eine kapazitive Schaltfläche. Alternativ oder zusätzlich kann das Funktionselement durch kontaktfreie Verfahren, beispielsweise durch das Erkennen von Gesten, oder in Abhängigkeit des durch eine Kamera und geeignete Auswerteelektronik festgestellten Zustands von Pupille oder Augenlid gesteuert werden. Eine Steuerung in Abhängigkeit des Augenlid- oder Pupillenzustands kommt dabei vor allem bei Funktionselementen als Sonnenblende einer Windschutzscheibe in Frage. Alternativ oder zusätzlich kann das Funktionselement durch Sensoren, welchen einen Lichteinfall auf die Scheibe detektieren, gesteuert werden.

Die erste thermoplastische Verbundfolie und die zweite thermoplastische Verbundfolie und gegebenenfalls auch weitere thermoplastische Verbundfolien enthalten bevorzugt zumindest Polyvinylbutyral (PVB), Ethylenvinylacetat (EVA) und / oder Polyurethan (PU), besonders bevorzugt PVB.

Die Dicke jeder thermoplastischen Verbundfolie beträgt bevorzugt von 0,2 mm bis 2 mm, besonders bevorzugt von 0,3 mm bis 1 mm, insbesondere von 0,3 mm bis 0,5 mm, beispielsweise 0,38 mm.

Die Außenscheibe und die Innenscheibe sind bevorzugt aus Glas gefertigt sind, besonders bevorzugt aus Kalk-Natron-Glas, wie es für Fensterscheiben üblich ist. Die Scheiben können aber auch aus anderen Glassorten gefertigt sein, beispielsweise Quarzglas, Borosilikatglas oder Alumino-Silikat-Glas, oder aus starren klaren Kunststoffen, beispielsweise Polycarbonat oder Polymethylmethacrylat. Die Außenscheibe und oder die Innenscheibe können thermisch oder chemisch vorgespannt sein. Insbesondere dünne Innenscheiben mit einer Dicke von kleiner oder gleich 1 mm werden bevorzugt aus chemisch vorgespanntem Alumino-Silikat-Glas gefertigt. Die Scheiben können klar sind, oder auch getönt oder gefärbt, solange die Windschutzscheibe im zentralen Sichtbereich eine ausreichende Lichttransmission aufweist, bevorzugt mindestens 70 % im Haupt-Durchsichtbereich A gemäß ECE-R43.

Die Außenscheibe, die Innenscheibe und/oder die Zwischenschicht können weitere geeignete, an sich bekannte Beschichtungen aufweisen, beispielsweise Antireflexbeschichtungen, Antihaftbeschichtungen, Antikratzbeschichtungen, photokatalytische Beschichtungen oder Sonnenschutzbeschichtungen oder Low-E-Beschichtungen.

Die Dicke der Außenscheibe und der Innenscheibe kann breit variieren und so den Erfordernissen im Einzelfall angepasst werden. Die Außenscheibe und die Innenscheibe weisen bevorzugt Dicken von 0,5 mm bis 5 mm auf, besonders bevorzugt von 1 mm bis 3 mm.

Die Erfindung betrifft weiter ein Verfahren zur Herstellung einer Verbundscheibe mit Funktionselement umfassend die Schritte
a) Bereitstellen eines Funktionselementes mit elektrisch steuerbaren optischen Eigenschaften, dessen aktive Schicht eine Matrix und eine aktive Substanz umfasst, wobei die Konzentration der aktiven Substanz über die Fläche des Funktionselementes variiert,
b) Auflegen eines Schichtstapels auf eine Innenscheibe oder eine Außenscheibe, wobei der Schichtstapel in dieser Reihenfolge mindestens eine erste thermoplastische Verbundfolie, das in Schritt a) bereitgestellte Funktionselement und eine zweite thermoplastische Verbundfolie umfasst und der Schichtstapel mit einer Innenscheibe bzw. einer Außenscheibe abgeschlossen wird,
c) Verbinden der Innenscheibe und der Außenscheibe durch Lamination, wobei aus der ersten thermoplastischen Verbundfolie und der zweiten thermoplastischen Verbundfolie eine thermoplastische Zwischenschicht mit eingelagertem Funktionselement gebildet wird.

Die elektrische Kontaktierung der Flächenelektroden des Funktionselements erfolgt bevorzugt vordem Laminieren der Verbundscheibe.

Eventuell vorhandene Drucke, beispielsweise opake Abdeckdrucke oder aufgedruckte Sammelleiter zur elektrischen Kontaktierung des Funktionselements werden bevorzugt im Siebdruckverfahren aufgebracht.

Das Laminieren erfolgt bevorzugt unter Einwirkung von Hitze, Vakuum und/oder Druck. Es können an sich bekannte Verfahren zur Lamination verwendet werden, beispielsweise Autoklavverfahren, Vakuumsackverfahren, Vakuumringverfahren, Kalanderverfahren, Vakuumlaminatoren oder Kombinationen davon.

In einer bevorzugten Ausführungsform des erfindungsgemäßen Verfahrens wird vor Schritt a) ein Funktionselement in Form einer Mehrschichtfolie umfassend die nachfolgend genannten Schritte hergestellt:
a1) Bereitstellen einer ersten Trägerfolie mit einer ersten Flächenelektrode, wobei die Flächenelektrode in Form einer elektrisch leitfähigen Schicht auf einer Oberfläche der Trägerfolie aufgebracht ist,
a2) Aufbringen einer Lösung umfassend eine Matrixsubstanz zur Ausbildung einer Matrix und eine aktive Substanz auf mindestens einen Abschnitt der ersten Flächenelektrode der ersten Trägerfolie, wobei das Verhältnis von aktiver Substanz und Matrixsubstanz so gewählt wird, dass in mindestens einem Abschnitt der ersten Flächenelektrode ein erster Konzentrationsbereich mit einer Ausgangskonzentration c₀ der aktiven Substanz entsteht,
a3) Aufbringen einer Lösung umfassend eine Matrixsubstanz zur Ausbildung einer Matrix und eine aktive Substanz auf mindestens einen weiteren Abschnitt der ersten Flächenelektrode der ersten Trägerfolie, wobei das Verhältnis von aktiver Substanz und Matrixsubstanz so gewählt wird, dass in mindestens einem Abschnitt der ersten Flächenelektrode ein zweiter Konzentrationsbereich mit einer Konzentration c<c₀ der aktiven Substanz entsteht,
a4) Abdecken der Anordnung mit einer zweiten Trägerfolie mit einer zweiten Flächenelektrode, wobei die zweite Flächenelektrode in Form einer elektrisch leitfähigen Schicht auf einer Oberfläche der Trägerfolie aufgebracht ist und in Richtung der aktiven Substanz orientiert wird,
a5) Verbinden des Schichtstapels zu einer Mehrschichtfolie als Funktionselement, wobei aus Matrix und aktiver Substanz eine aktive Schicht ausbildet wird.

Zur Herstellung von Mehrschichtfolien als Funktionselemente sind im Stand der Technik diverse Methoden bekannt mit denen die im Stand der Technik bekannten Funktionselemente, die eine konstante Konzentration der aktiven Substanz über das gesamte Funktionselement aufweisen, bereitgestellt werden können. In einer bevorzugten Ausführungsform des erfindungsgemäßen Verfahrens wird ein PDLC-Funktionselement hergestellt. Generell unterscheidet man zur Herstellung von PDLC-Mehrschichtfolien als Funktionselementen zwischen der Methode zur sogenannten Einkapselung und den Phasenseparationsmethoden. Bei Einkapselung werden zunächst Flüssigkristalle in einer Polymerlösung dispergiert, wobei ein Lösungsmittel verwendet wird, in dem die Flüssigkristalle nicht löslich sind. Wird das Lösungsmittel verdampft, so bildet sich die aktive Schicht durch Verfestigung der Polymermatrix aus. Die Größe der in der Polymerlösung dispergierten Flüssigkristalltröpfchen ist davon abhängig wie intensiv die Lösung gerührt wird. Im Laufe des Prozesses kann eine teilweise unerwünschte Koagulation der Flüssigkristalltröpfchen erfolgen, so dass die Morphologie der aktiven Schicht nur schwer steuerbar ist. Bei den im Stand der Technik bekannten Phasenseparationsmethoden liegt zunächst ein homogenes System vor, wobei die Flüssigkristalltröpfchen bei Verfestigung der Matrix ausgebildet werden. Die diversen Phasenseparationsmethoden unterscheiden sich grundsätzlich durch die Methode der Aushärtung der Matrix. Dazu gehören Phasenseparation durch thermische Aushärtung der Polymere, durch Verdampfen des Lösungsmittels, durch temperaturinduzierte Phasentrennung bei Abkühlung oder durch Photopolymerisation mittels UV-Licht. Phasenseparationsmethoden sind gängiger und einfacher realisierbar als Einkapselung. Grundsätzlich sind diverse Arten der Phasenseparationsmethoden zur Umsetzung der Erfindung geeignet.

In einer möglichen Ausgestaltung des erfindungsgemäßen Verfahrens wird ein PDLC-Funktionselement mittels Photopolymerisation hergestellt. In den verschiedenen erwünschten Konzentrationsbereichen des Funktionselementes werden Lösungen enthaltend Flüssigkristalle und Pre-Polymere mit unterschiedlicher Flüssigkristallkonzentration aufgebracht. Durch Bestrahlung mit UV-Licht wird das Prepolymer ausgehärtet, wobei die Flüssigkristalle in Form von Tröpfchen in der sich bildenden Polymermatrix eingeschlossen werden.

Werden bei Herstellung des Funktionselementes mittels einem der oben genannten Verfahren Flüssigkristall-(Pre-)Polymer-Lösungen in einander unmittelbar benachbarten Bereichen aufgetragen, was in der Regel der Fall ist, so findet eine Diffusion der aktiven Substanz zwischen diesen Bereichen mit Lösungen unterschiedlicher Konzentration statt. Dies hat den Effekt, dass die Übergänge zwischen den Konzentrationsbereichen optisch nicht als scharfe Kante in Erscheinung treten, sondern in abgemildert werden. Je nachdem in welchem Maße dies erwünscht ist kann auch gezielt eine längere Wartezeit vor Aushärtung der aktiven Schicht vorgesehen werden.

In einer bevorzugten Ausführungsform des erfindungsgemäßen Verfahrens wird ein dritter Konzentrationsbereich zwischen einem ersten Konzentrationsbereich mit einer Ausgangskonzentration c₀ der aktiven Substanz und einem zweiten Konzentrationsbereich mit einer Konzentration der aktiven Substanz von c=0 in situ erzeugt. Dabei wird auf der Fläche, auf der ein erster Konzentrationsbereich erzeugt werden soll, eine erste Flüssigkristall-(Pre-)Polymer-Lösung aufgetragen und auf der Fläche, auf der ein zweiter Konzentrationsbereich erzeugt werden soll, eine (Pre-)Polymer-Lösung ohne Flüssigkristalle aufgetragen. In dem Bereich, in dem sich die beiden Lösungen unmittelbar berühren, vermischen diese sich durch Diffusion. Dadurch wird ein dritter Konzentrationsbereich erzeugt, in dem die Konzentration der aktiven Substanz zwischen null und c₀ liegt. Die Vermischung der Lösungen kann optional auch durch mechanische Verfahren, beispielsweise durch Rütteln der Trägerfolie mit darauf befindlichen Lösungen, verbessert werden.

Die Erfindung umfasst weiterhin die Verwendung einer erfindungsgemäßen Verbundscheibe als Windschutzscheibe oder Dachscheibe eines Fahrzeugs, bevorzugt als Windschutzscheibe eines Fahrzeugs, wobei das elektrisch steuerbare Funktionselement als Sonnenblende verwendet wird.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:
- Figur 1a: eine Ausführungsform einer erfindungsgemäßen Verbundscheibe als Windschutzscheibe mit Sonnenblende,
- Figur 1b: einen Querschnitt entlang der Schnittlinie AA' durch die Verbundscheibe gemäß Figur 1a im Bereich Z,
- Figur 1c: ein Diagramm des Konzentrationsverlaufs der aktiven Substanz entlang der Schnittlinie AA' der Verbundscheibe gemäß Figur 1a,
- Figur 2: eine weitere Ausführungsform einer erfindungsgemäßen Verbundscheibe als Windschutzscheibe mit Sonnenblende,
- Figur 3a: eine Ausführungsform einer erfindungsgemäßen Verbundscheibe als Dachscheibe mit Sonnenblende,
- Figur 3b: einen Querschnitt durch die Verbundscheibe gemäß Figur 3a entlang der Schnittlinie BB'.

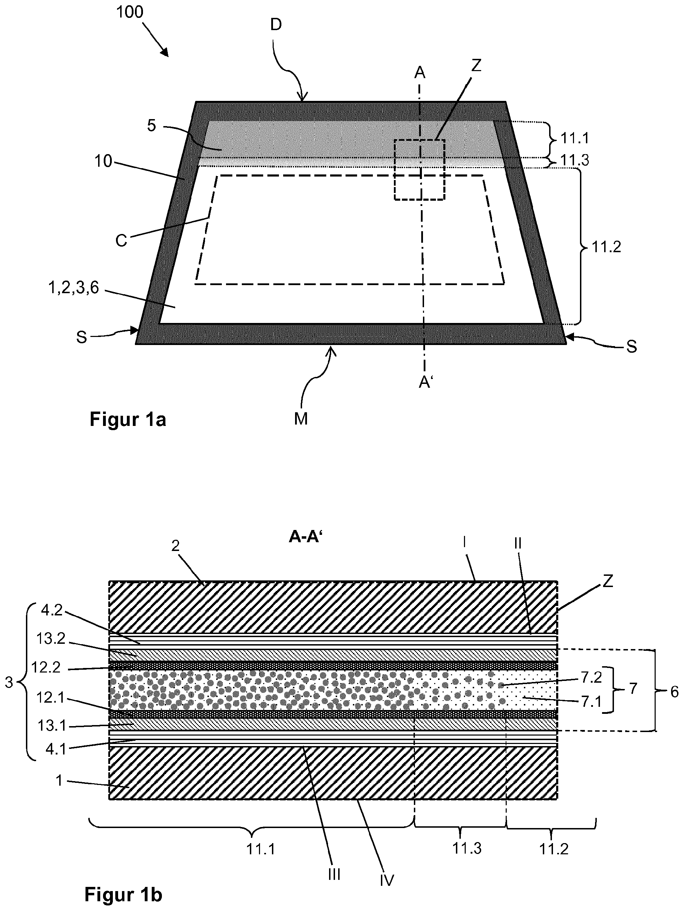

Figuren 1a und 1b zeigen eine Ausgestaltung einer erfindungsgemäßen Verbundscheibe 100 umfassend eine Innenscheibe 1, eine Außenscheibe 2 und eine thermoplastische Zwischenschicht 3, in die eine Mehrschichtfolie 6 als Funktionselement 5 eingelagert ist. Figur 1a stellt eine Draufsicht auf die erfindungsgemäße Verbundscheibe 100 dar. Die Verbundscheibe 100 ist trapezförmig in Form einer Windschutzscheibe ausgeführt. Die Außenscheibe 2 weist eine Dicke von 2,1 mm auf und besteht aus einem grün eingefärbten Kalk-Natron-Glas. Die Innenscheibe 1 weist eine Dicke von 1,6 mm auf und besteht aus einem klaren Kalk-Natron-Glas. Die Windschutzscheibe weist eine in Einbaulage dem Dach zugewandte Oberkante D und eine in Einbaulage dem Motorraum zugewandte Unterkante M auf. Das zentrale Sichtfeld C der Windschutzscheibe ist in Form einer nicht durchgängigen Linie angedeutet. Das Funktionselement 5 ist großflächig im gesamten Durchsichtbereich der Scheibe eingebracht, d.h. im gesamten Bereich der Windschutzscheibe, der nicht durch einen opaken Abdeckdruck 10 verdeckt ist.

Der Randbereich der Verbundscheibe 100 wird von einem umlaufenden opaken Abdeckdruck 10 (umlaufender peripherer Schwarzdruck) verdeckt, der zumindest auf der Innenseite II der Außenscheibe 2 aufgebracht ist. Der Schwarzdruck wird durch Aufdrucken eines opaken Emaille auf den innenraumseitigen Oberflächen (in Einbaulage dem Innenraum des Fahrzeugs zugewandt) der Scheiben ausgebildet. Auf der Innenseite III der Innenscheibe 1 kann optional ebenfalls ein Schwarzdruck 10 aufgebracht werden. Die umlaufende Kante (hier nicht gezeigt) des Funktionselementes 5 liegt im Bereich des opaken Abdeckdrucks 10, so dass diese bei Betrachtung der Windschutzscheibe von außen nicht erkennbar ist. Der Abstand des Funktionselements 5 zur umlaufenden Kante der Windschutzscheibe ist somit kleiner als die Breite des opalen Abdeckdrucks 10. Auch die nicht dargestellten elektrischen Anschlüsse werden sinnvollerweise im Bereich des Abdeckdrucks 10 angebracht und somit versteckt. Auf der ersten Flächenelektrode 13.1 und der zweiten Flächenelektrode 13.2 der Mehrschichtfolie 6 sind im Bereich des opaken Abdeckdrucks 10 Sammelleiter (nicht gezeigt) angebracht. Über die Sammelleiter kann eine elektrische Spannung zwischen den Flächenelektroden 13.1, 13.2 angelegt werden. Die Sammelleiter verlaufen bevorzugt entlang der Seitenkanten S des Funktionselementes 5.

Figur 1b zeigt einen Querschnitt der Verbundscheibe 100 gemäß Figur 1a entlang der Schnittlinie AA' im Bereich Z. Das Funktionselement 5 ist durch eine PDLC-Mehrschichtfolie 6 ausgebildet. Die Mehrschichtfolie 6 ist durch eine erste thermoplastische Verbundfolie 4.1 mit der Innenscheibe 1 verbunden und über eine zweite thermoplastische Verbundfolie 4.2 an die Außenscheibe 2 angebunden. Das Funktionselement 5 ist durch Anlegen einer elektrischen Spannung in seinen optischen Eigenschaften steuerbar. Die elektrischen Zuleitungen sind der Einfachheit halber nicht dargestellt.

Das steuerbare Funktionselement 5 ist eine Mehrschichtfolie 6, beispielsweise eine PDLC-Mehrschichtfolie, bestehend aus einer aktiven Schicht 7 zwischen zwei Flächenelektroden 12.1, 12.2 und zwei Trägerfolien 13.1, 13.2. Die aktive Schicht 7 enthält eine Matrix 7.1 mit einer darin befindlichen aktiven Substanz 7.2. Im Fall einer PDLC-Mehrschichtfolie ist die Matrix 7.1 durch eine Polymermatrix gebildet, in der als aktive Substanz 7.2 darin dispergierte Flüssigkristalle enthalten sind. Die Flüssigkristalle liegen dabei in Tropfenform mit einer Tropfengröße von wenigen µm vor. Die Flüssigkristalle richten sich in Abhängigkeit der an die Flächenelektroden 12.1, 12.2 angelegten elektrischen Spannung aus, wodurch die optischen Eigenschaften gesteuert werden können. Die Trägerfolien 13.1, 13.2 bestehen aus PET und weisen eine Dicke von beispielsweise 50 µm auf. Die Trägerfolien 13.1, 13.2 sind mit einer zur aktiven Schicht 7 weisenden Beschichtung aus ITO mit einer Dicke von etwa 100 nm versehen, welche die Flächenelektroden 12.1, 12.2 ausbilden. Die Flächenelektroden 12.1, 12.2 sind über nicht dargestellte Sammelleiter (beispielweise ausgebildet durch einen silberhaltigen Siebdruck) und nicht dargestellte Verbindungskabel mit einer Spannungsquelle verbindbar. Die thermoplastischen Verbundfolien 4.1, 4.2 umfassen jeweils eine thermoplastische Folie aus PVB mit einer Dicke von 0,38 mm.

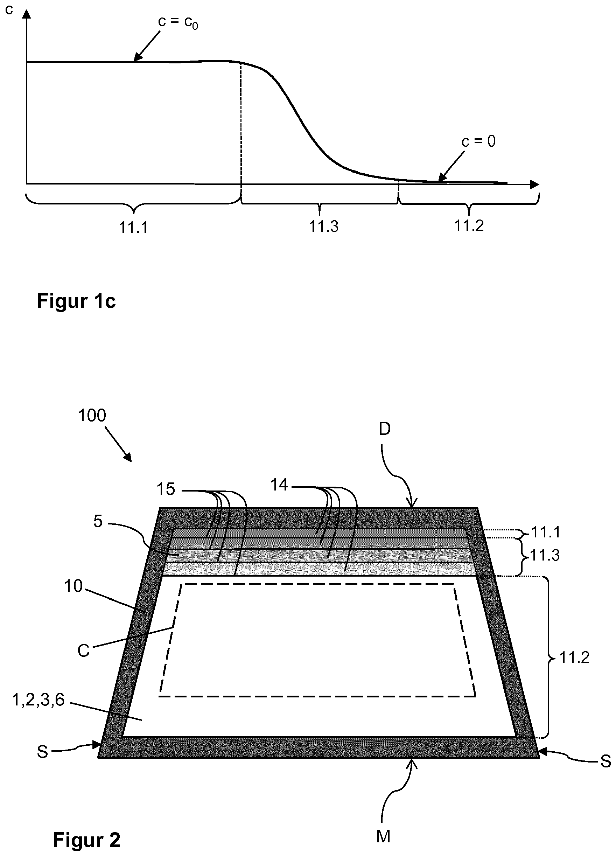

Die Mehrschichtfolie 6 weist einen Konzentrationsgradienten der aktiven Substanz 7.2 innerhalb der aktiven Schicht 7 auf. Die Konzentration der aktiven Substanz 7.2 nimmt dabei von der Dachkante D der Verbundscheibe 100 zur Motorkante M ab. In Nachbarschaft zu Dachkante D liegt dabei ein erster Konzentrationsbereich 11.1 vor, in dem die Konzentration der aktiven Substanz einer Ausgangskonzentration c₀ entspricht. Diese Ausgangskonzentration c₀ ist so gewählt, dass in diesem Bereich die gewünschte maximale Änderung der optischen Eigenschaften auftritt. Die Größenordnung der Ausgangskonzentration c₀ ist dabei abhängig von der Bauart der Mehrschichtfolie. Bei PDLC-Mehrschichtfolien besteht beispielsweise eine Abhängigkeit von dem gewählten Flüssigkristall. Generell entspricht c₀ der Konzentration, die bei kommerziell erhältlichen Mehrschichtfolien mit konstanter Konzentration verwendet wird. Nachdem der Fachmann zwischen den vielfältig im Stand der Technik beschriebenen Mehrschichtfolien das gewünschte System ausgewählt hat, ergibt sich somit eine geeignete Ausgangskonzentration c₀ im Stand der Technik. Angrenzend an die Motorkante M befindet sich ein zweiter Konzentrationsbereich 11.2 der Mehrschichtfolie 6, in dem die Konzentration der aktiven Substanz 7.2 null beträgt. Demnach umfasst die aktive Schicht 7 in diesem Bereich lediglich die Matrix 7.1 und keinerlei aktive Substanz 7.2. der zweite Konzentrationsbereich 11.2 erstreckt sich über das gesamte zentrale Sichtfeld C der Windschutzscheibe. Zwischen dem ersten Konzentrationsbereich 11.1 und dem zweiten Konzentrationsbereich 11.2 befindet sich ein dritter Konzentrationsbereich 11.3, in dem die mittlere Konzentration der aktiven Substanz 7.2 der halben Ausgangskonzentration entspricht und demnach gilt c = 0,5 * c₀. Innerhalb des dritten Konzentrationsbereichs 11.3 besteht ein Konzentrationsgradient, wobei mit steigendem Abstand zur Dachkante D die Konzentration der aktiven Substanz 7.2 abnimmt. Figur 1c zeigt diesen Konzentrationsverlauf in Form eines Diagramms. Alternativ können der erste Konzentrationsbereich 11.1 und der zweite Konzentrationsbereich 11.2 auch ohne dritten Konzentrationsbereich 11.3 vorgesehen werden und dabei unmittelbar aneinandergrenzen. Die Konzentrationsbereiche 11.1, 11.3, in denen die Konzentration der aktiven Substanz 7.2 größer null beträgt, werden als elektrisch steuerbare Sonnenblende genutzt. Die Höhe der Sonnenblende beträgt dabei beispielsweise 21 cm.

In den Bereichen des Funktionselementes 5, in denen keine aktive Substanz 7.2 in der aktiven Schicht 7 vorliegt, erfolgt bei Anlegen einer Spannung keine Änderung der optischen Eigenschaften. Demnach ist es nicht notwendig in diesem Bereich Sammelleiter zur elektrischen Kontaktierung vorzusehen. Die zur Kontaktierung der Bereiche mit aktiver Substanz 7.2 vorgesehenen Sammelleiter können jedoch in Bereiche ohne aktive Substanz 7.2 hineinragen. Optional können die Sammelleiter auch entlang der gesamten Seitenkanten S der Verbundscheibe angebracht werden, unabhängig von der Konzentration der aktiven Substanz 7.2 in diesen Bereichen.

Die erfindungsgemäße Verbundscheibe 100 mit Mehrschichtfolie 6 stellt eine vorteilhafte Weiterbildung des Stands der Technik dar, da die Mehrschichtfolie 6 auch großflächig im Sichtbereich von Verbundscheiben vorgesehen werden kann. Dadurch entfällt eine optisch störende Kante zwischen Scheibenbereichen ohne Mehrschichtfolie und Scheibenbereichen mit Mehrschichtfolie.

Figur 2 zeigt eine weitere Ausführungsform einer erfindungsgemäßen Verbundscheibe mit Mehrschichtfolie. Die Verbundscheibe ist als Windschutzscheibe ausgeführt und entspricht im Wesentlichen der in Figuren 1a, 1b und 1c beschriebenen Ausführungsform. Im Unterschied dazu ist das Funktionselement 5 in mehrere Segmente 14 unterteilt, die sich unabhängig voneinander elektrisch ansteuern lassen. Derartige Segmente können beispielsweise in den Konzentrationsbereichen 11 des Funktionselementes 5 sinnvoll sein, in denen die Konzentration der aktiven Substanz 7.2 größer null beträgt (c > 0). Das PDLC-Funktionselement 5 ist durch horizontale Trennlinien 15 in sechs streifenartige Segmente 14 aufgeteilt. Die Trennlinien 15, die eine elektrische Isolierung der Segmente 14 voneinander bewirken, weisen beispielsweise eine Breite von 40 µm bis 120 µm und einen gegenseitigen Abstand von 3,5 cm auf. Sie sind mittels eines Lasers in die vorgefertigte Mehrschichtfolie 6 eingebracht worden. Zwischen einander benachbarten Trennlinien 15 sind im Bereich des opaken Abdeckdrucks 10 Sammelleiter (nicht gezeigt) angebracht. Die Sammelleiter der einzelnen Segmente 14 verfügen jeweils über einen separaten elektrischen Anschluss. So sind die Segmente 14 unabhängig voneinander schaltbar. Je dünner die Trennlinien 15 ausgeführt sind, desto unauffälliger sind sie. Mittels Ätzverfahren können noch dünnere Trennlinien 15 realisiert werden.

Die Ausführungsform der Figur 2 verfügt, wie bereits bei Figuren 1a, 1b, 1c beschrieben, über mehrere Konzentrationsbereiche 11.1, 11.2, 11.3. Die Konzentrationsbereiche 11 der Figur 2 können in ihrer Höhe unabhängig von den Segmenten 14 gestaltet werden. Ein Konzentrationsbereich 11 kann dabei ein oder mehrere Segmente 14 umfassen. Im Sinne einer optisch ansprechenden Gestaltungsweise wird bei Windschutzscheiben mit Sonnenblende der Übergang zwischen zwei Konzentrationsbereichen 11 beispielsweise an einer Trennlinie 15 vorgesehen.

Durch die Segmentierung lässt sich die Höhe des abgedunkelten Funktionselements 5 einstellen. So kann der Fahrer abhängig vom Sonnenstand die gesamte Sonnenblende oder auch nur einen Teil davon abdunkeln. So kann beispielsweise die obere, der Dachkante näherliegende, Hälfte der Sonnenblende abgedunkelt und die untere Hälfte transparent sein.

In einer besonders komfortablen Ausgestaltung wird das Funktionselement 5 durch eine im Bereich des Funktionselements angeordnete kapazitive Schaltfläche gesteuert, wobei der Fahrer durch den Ort, an dem er die Scheibe berührt, den Abdunklungsbereich festlegt.

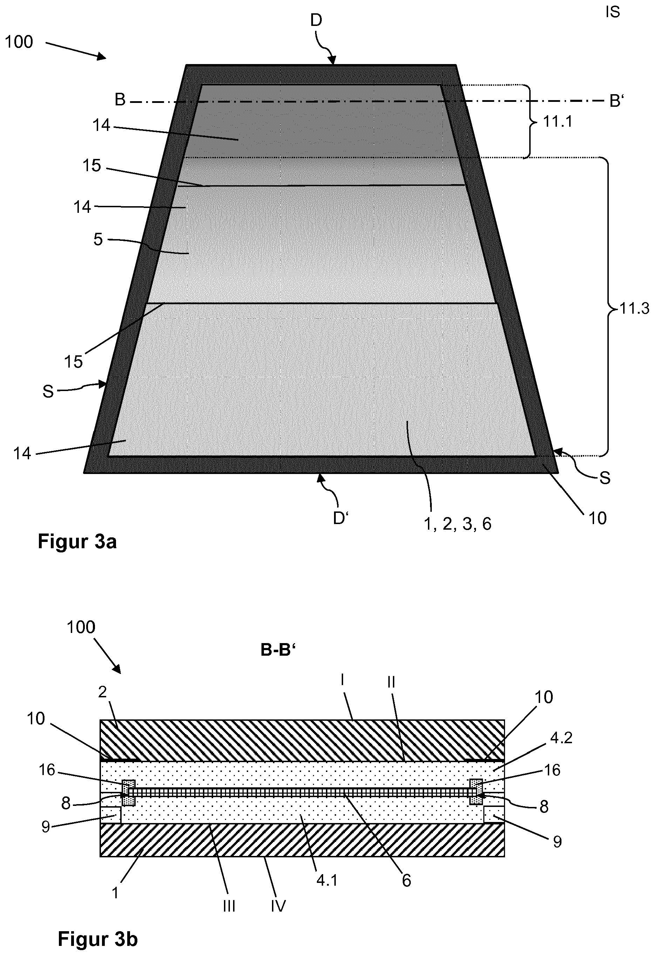

Figuren 3a und 3b stellen eine weitere Ausführungsform einer erfindungsgemäßen Verbundscheibe 100 dar, die als Dachscheibe eines Kraftfahrzeugs ausgeformt ist. Die Dachscheibe sowie die Mehrschichtfolie 6 der Dachscheibe entsprechen in ihrem Grundaufbau der in Figur 2 beschriebenen Verbundscheibe 100. Auf Unterschiede wird im Folgenden eingegangen. Figur 3a zeigt eine Draufsicht der Verbundscheibe 100 als Dachscheibe eines Kraftfahrzeugs. Die Dachscheibe weist eine Dachkante D auf, die in Einbaulage der Dachscheibe in einem Kraftfahrzeug in Richtung der Windschutzscheibe weist, während eine hintere Dachkante D' in Nachbarschaft zur Heckscheibe ausgerichtet ist. Zwischen Dachkante D und hinterer Dachkante D' erstrecken sich oberhalb der Fahrzeugtüren die Seitenkanten S. Figur 3b zeigt einen Querschnitt der Dachscheibe gemäß Figur 3a entlang der Schnittlinie BB'. Die Dachscheibe umfasst eine Innenscheibe 1, eine Außenscheibe 2, eine erste thermoplastische Verbundfolie 4.1, eine zweite thermoplastische Verbundfolie 4.2 und eine Mehrschichtfolie 6 als Funktionselement 5. Die Innenscheibe 1 und die Außenscheibe 2 sind kongruent zueinander gebogen. Die Außenscheibe der Verglasung ist zur Fahrzeugumgebung orientiert, während die Innenscheibe der Verbundscheibe zum Fahrzeuginnenraum weist. Die Außenscheibe 2 besteht aus klarem Kalk-Natron-Glas mit einer Dicke von 2,1 mm. Die Innenscheibe 1 besteht aus Kalk-Natron-Glas mit einer Dicke von 1,6 mm und ist grau getönt. Das getönte Innenglas trägt zur ansprechenden Erscheinung der Scheibe bei, auch für den Fahrzeuginsassen bei einem Blick durch die Dachscheibe. Die Scheiben 1, 2 sind über die thermoplastische Zwischenschicht 3 mit darin eingelegter Mehrschichtfolie 6 verbunden. Die thermoplastische Zwischenschicht 3 umfasst die erste thermoplastische Verbundfolie 4.1, die zweite thermoplastische Verbundfolie 4.2. Das Funktionselement 5, hier in Form einer Mehrschichtfolie 6, ist ebenfalls über die thermoplastischen Verbundfolien 4.1, 4.2 an den Scheiben 1, 2 angebunden. Entlang der umlaufenden Kante 8 des Funktionselementes 5 ist eine Randversiegelung 16 vorgesehen, die die umlaufende Kante 8 umschließt. Die Randversiegelung 16 kann beispielsweise in Form eines Klebebands um die Kante 8 geklebt werden. Ferner können auch Sperrfolien als Randversiegelung vorgesehen werden, die dazu auf gegenüberliegenden Oberflächen des Funktionselementes 5 unmittelbar auf diesem aufgelegt sind und im Wesentlichen deckungsgleich zueinander positioniert sind. Dabei weisen die Sperrfolien eine Überlappung mit dem Funktionselement sowie einen Überstand über das Funktionselement hinaus auf um eine gute Abdichtung der Kante 8 zu erzielen. Die Sperrfolien sind im Wesentlichen weichmacherfrei und bestehen beispielsweise aus PET. Mittels der Randversiegelung 16 wird eine Diffusion des Weichmachers aus der thermoplastischen Zwischenschicht 3 in das Funktionselement 5 und eine damit einhergehende Degradation des Funktionselements 5 vermieden. In dieser Ausgestaltung ist abschnittsweise zwischen erster thermoplastischer Verbundfolie 4.1 und Innenscheibe 1 eine thermoplastische Rahmenfolie 9 angeordnet. Die thermoplastische Rahmenfolie 9 besteht beispielsweise aus dem gleichen Material wie die thermoplastischen Verbundfolien 4.1, 4.2. Die thermoplastische Rahmenfolie 9 weist einen Ausschnitt auf, in welchen das Funktionselement 5 mit der Randversiegelung 16 und den thermoplastischen Verbundfolien 4.1, 4.2 passgenau, das heißt an allen Seiten bündig, eingelegt ist. Die thermoplastische Rahmenfolie 9 bildet damit eine Art Passepartout für das Funktionselement 5. Durch die thermoplastische Rahmenfolie 9 können die Dickenunterschiede, die durch die Materialdicke des Funktionselements 5 bedingt sind, ausgeglichen werden. Die thermoplastische Rahmenfolie 9 wird optional in Abhängigkeit von den Dickenunterschieden zwischen Bereichen mit Funktionselement 5 und ohne Funktionselement 5 verwendet. Insbesondere wird die thermoplastische Rahmenfolie 9 lediglich in Bereichen verwendet, die außerhalb des Durchsichtbereichs der Verbundscheibe 100 im Bereich des opaken Abdeckdrucks 10 liegen. Auf diese Weise wird die in Durchsicht optisch sichtbare Kante zwischen Funktionselement 5 und thermoplastischer Zwischenschicht 3 vom opaken Abdeckdruck 10 kaschiert. Auf die Randversiegelung 16 kann in Bereichen der Mehrschichtfolie 6 verzichtet werden, in denen die Konzentration der aktiven Substanz 7.2 null beträgt. Die Zusammensetzung der Mehrschichtfolie 6 entspricht im Wesentlichen dem in Figuren 1a-1c beschriebenen. Im Unterschied dazu liegen gemäß Figur 3a lediglich ein erster Konzentrationsbereich 11.1 mit einer Ausgangskonzentration c₀ der aktiven Substanz 7.2 und ein dritter Konzentrationsbereich 11.3 mit einer Konzentration von c < c₀ vor. Bei Dachscheiben von Kraftfahrzeugen ist im gesamten Scheibenbereich ein Sonnenschutz wünschenswert, wobei im vorderen Bereich eine stärkere Abdunklung sinnvoll sein kann um eine uneingeschränkte Sicht des Fahrers zu gewährleisten und ein Blenden durch Sonneneinstrahlung zu vermeiden. Das Funktionselement 5 kann in Form von frei Segmenten 14 variabel geschaltet werden. Es ist zu erwarten, dass häufig je nach Sonnenstand lediglich das erste, der Dachkante D benachbarte, Segment 14 intransparent geschaltet ist. Um auch in diesem Zustand ein optisch ansprechendes Erscheinungsbild zu gewährleisten, ist der Übergang zwischen erstem Konzentrationsbereich 11.1 und drittem Konzentrationsbereich 11.3 innerhalb dieses ersten Segmentes 14 angeordnet. So liegt ein optisch ansprechender Übergang zwischen intransparent geschaltetem ersten Segment und den restlichen im transparenten Zustand befindlichen Segmenten vor.

### Bezugszeichenliste:

- 1: Innenscheibe
- 2: Außenscheibe
- 3: thermoplastische Zwischenschicht
- 4: thermoplastische Verbundfolien
- 4.1: erste thermoplastische Verbundfolie
- 4.2: zweite thermoplastische Verbundfolie
- 5: Funktionselement mit elektrisch steuerbaren optischen Eigenschaften
- 6: Mehrschichtfolie
- 7: aktive Schicht des Funktionselements 5
- 7.1: Matrix der aktiven Schicht 7
- 7.2: aktive Substanz der aktiven Schicht 7
- 8: umlaufende Kante des Funktionselementes 5
- 9: thermoplastische Rahmenfolie
- 10: opaker Abdeckdruck
- 11: Konzentrationsbereiche der aktiven Substanz 7.1
- 11.1: erster Konzentrationsbereich mit Ausgangskonzentration coder aktiven Substanz 7.1
- 11.2: zweiter Konzentrationsbereich ohne aktive Substanz 7.1 (Konzentration c = 0)
- 11.3: dritter Konzentrationsbereich mit niedrigerer Konzentration c < c₀ der aktiven Substanz 7.1
- 12: Flächenelektroden des Funktionselements 5
- 12.1: erste Flächenelektrode
- 12.2: zweite Flächenelektrode
- 13: Trägerfolien
- 13.1: erste Trägerfolie
- 13.2: zweite Trägerfolie
- 14: Segmente
- 15: Trennlinie
- 16: Randversiegelung

- 100: Verbundscheibe

- AA', BB': Schnittlinien
- Z: vergrößerter Bereich
- C: Sichtfeld
- M: Motorkante
- D: Dachkante
- D': hintere Dachkante
- S: Seitenkante

## Patentansprüche

1. Verbundscheibe (100) mit Funktionselement (5) mit elektrisch steuerbaren optischen Eigenschaften, mindestens umfassend
- eine Innenscheibe (1) umfassend eine Innenseite (III) und eine Außenseite (IV) und eine Außenscheibe (2) umfassend eine Innenseite (II) und eine Außenseite (I),
- eine thermoplastische Zwischenschicht (3), die die Innenseite (III) der Innenscheibe (1) mit der Innenseite (II) der Außenscheibe (2) verbindet,
- ein in der thermoplastischen Zwischenschicht (3) eingelagertes Funktionselement (5) mit elektrisch steuerbaren optischen Eigenschaften mindestens umfassend eine Mehrschichtfolie (6) enthaltend in dieser Reihenfolge flächenmäßig übereinander angeordnet
- eine erste Trägerfolie (13.1)
- eine erste Flächenelektrode (12.1)
- eine aktive Schicht (7)
- eine zweite Flächenelektrode (12.2)
- eine zweite Trägerfolie (13.2),
wobei die aktive Schicht (7) eine Matrix (7.1) und eine aktive Substanz (7.2) umfasst und die Konzentration der aktiven Substanz (7.2) über die Fläche des Funktionselementes (5) variiert.

2. Verbundscheibe (100) mit Funktionselement (5) nach Anspruch 1, wobei die aktive Schicht (7) mehrere Konzentrationsbereiche (11) umfasst, die sich in der Konzentration der aktiven Substanz (7.2) unterscheiden.

3. Verbundscheibe (100) mit Funktionselement (5) nach Anspruch 2, wobei die aktive Schicht (7) mindestens einen ersten Konzentrationsbereich (11.1) mit einer Ausgangskonzentration c₀ der aktiven Substanz (7.2) aufweist und einen zweiten Konzentrationsbereich (11.2) aufweist, in dem die Konzentration der aktiven Substanz (7.2) gleich null ist.

4. Verbundscheibe (100) mit Funktionselement (5) nach Anspruch 3, wobei zwischen dem ersten Konzentrationsbereich (11.1) und dem zweiten Konzentrationsbereich (11.2) ein dritter Konzentrationsbereich (11.3) angeordnet ist, in dem die Konzentration der aktiven Substanz (7.2) zwischen der Konzentration im ersten Konzentrationsbereich (11.1) und der Konzentration im zweiten Konzentrationsbereich (11.2) liegt.

5. Verbundscheibe (100) mit Funktionselement (5) nach einem der Ansprüche 1 bis 4, wobei das Funktionselement (5) ein PDLC-Element ist, die aktive Schicht (7) eine PDLC-Schicht ist, die Matrix (7.1) eine polymere Matrix ist und die aktive Substanz (7.2) Flüssigkristalle sind, die in Form von Flüssigkristalltröpfchen in der polymeren Matrix dispergiert sind.

6. Verbundscheibe (100) mit Funktionselement (5) nach Anspruch 5, wobei die Konzentration der aktiven Substanz (7.2) über die Anzahl der Flüssigkristalltropfen variiert wird.

7. Verbundscheibe (100) mit Funktionselement (5) nach einem der Ansprüche 1 bis 6, wobei ein Konzentrationsgradient der aktiven Substanz (7.2) von einer Scheibenkante der Verbundscheibe (100) zu einer gegenüberliegenden Scheibenkante der Verbundscheibe (100) vorliegt.

8. Verbundscheibe (100) mit Funktionselement (5) nach einem der Ansprüche 1 bis 7, wobei die Verbundscheibe (100) eine Windschutzscheibe eines Kraftfahrzeugs umfassend eine Motorkante (M), eine Dachkante (D) und zwei Seitenkanten (S) ist und der erste Konzentrationsbereich (11.1) mit einer Ausgangskonzentration c₀ der aktiven Substanz (7.2) benachbart zur Dachkante (D) angeordnet ist und ein zweiter Konzentrationsbereich (11.2), in dem die Konzentration der aktiven Substanz (7.2) gleich null ist, benachbart zur Motorkante (M) angeordnet ist.

9. Verbundscheibe (100) mit Funktionselement (5) nach einem der Ansprüche 1 bis 8, wobei in mindestens eine Flächenelektrode (12) mindestens eine Trennlinie (16) eingebracht ist und die mindestens eine Trennlinie (15) die Flächenelektrode (12) in mindestens zwei Segmente (14) unterteilt, deren elektrisch steuerbare optische Eigenschaften unabhängig voneinander schaltbar sind.

10. Verbundscheibe mit Funktionselement (5) nach einem der Ansprüche 1 bis 9, wobei die thermoplastische Zwischenschicht (3) mindestens eine erste thermoplastische Verbundfolie (4.1) und mindestens eine zweite thermoplastische Verbundfolie (12.2) und optional eine thermoplastische Rahmenfolie (9) umfasst, wobei die erste thermoplastische Verbundfolie (12.1) das Funktionselement (16) mit der Innenseite (III) der Innenscheibe (13) verbindet und die zweite thermoplastische Verbundfolie (12.2) das Funktionselement (16) mit der Innenseite (II) der Außenscheibe (14) verbindet und die optional vorhandene thermoplastische Rahmenfolie (9) zwischen der ersten thermoplastischen Verbundfolie (12.1) und der zweiten thermoplastischen Verbundfolie (12.2) angeordnet ist und die umlaufende Kante (8) des Funktionselementes (5) umgibt.

11. Verbundscheibe (1) mit Funktionselement (5) nach Anspruch 10, wobei zumindest der Bereich der ersten thermoplastischen Verbundfolie (4.1) und/oder der zweiten thermoplastischen Verbundfolie (4.2), der mit dem ersten Konzentrationsbereich (11.1) des Funktionselementes (5) überlappt, getönt oder gefärbt ist.

12. Verfahren zur Herstellung einer Verbundscheibe (100) mit Funktionselement (5) nach einem der Ansprüche 1 bis 11 wobei zumindest
a) ein Funktionselement (5) mit elektrisch steuerbaren optischen Eigenschaften bereitgestellt wird, dessen aktive Schicht (7) eine Matrix (7.1) und eine aktive Substanz (7.2) umfasst, wobei die Konzentration der aktiven Substanz (7.2) über die Fläche des Funktionselementes (5) variiert,
b) auf eine Innenscheibe (1) oder eine Außenscheibe (2) in dieser Reihenfolge mindestens eine erste thermoplastische Verbundfolie (4.1), das bereitgestellte Funktionselement (5) und eine zweite thermoplastische Verbundfolie (4.2) aufgelegt werden und der Schichtstapel mit einer Innenscheibe (1) bzw. einer Außenscheibe (2) abgeschlossen wird,
c) die Innenscheibe (1) und die Außenscheibe (2) durch Lamination verbunden werden, wobei aus der ersten thermoplastischen Verbundfolie (4.1) und der zweiten thermoplastischen Verbundfolie (4.2) eine thermoplastische Zwischenschicht (3) mit eingelagertem Funktionselement (5) gebildet wird.

13. Verfahren nach Anspruch 12, wobei vor Schritt a)
a1) eine erste Trägerfolie (13.1) mit einer ersten Flächenelektrode (12.1) bereitgestellt wird,
a2) zumindest in einem Abschnitt eine Lösung umfassend eine Matrixsubstanz zur Ausbildung einer Matrix (7.1) und eine aktive Substanz (7.2) auf die erste Flächenelektrode (12.1) aufgetragen wird, wobei das Verhältnis von aktiver Substanz (7.2) und Matrixsubstanz so gewählt wird, dass in mindestens einem Abschnitt der ersten Flächenelektrode (12.1) ein erster Konzentrationsbereich (11.1) mit einer Ausgangskonzentration c₀ der aktiven Substanz (7.2) entsteht,
a3) zumindest in einem weiteren Abschnitt eine Lösung umfassend eine Matrixsubstanz zur Ausbildung einer Matrix (7.1) und eine aktive Substanz (7.2) auf die erste Flächenelektrode (12.1) aufgetragen wird, wobei das Verhältnis von aktiver Substanz (7.2) und Matrixsubstanz so gewählt wird, dass in mindestens einem Abschnitt der ersten Flächenelektrode (12.1) ein zweiter Konzentrationsbereich (11.2) mit einer Konzentration c<c₀ der aktiven Substanz entsteht,
a4) die Anordnung mit einer zweiten Trägerfolie (13.2) mit zweiten Flächenelektrode (12.2) abgedeckt wird, wobei die zweite Flächenelektrode (12.2) in Richtung der aktiven Substanz (7.2) orientiert wird,
a5) der Schichtstapel zu einer Mehrschichtfolie (6) als Funktionselement (5) verbunden wird und aus der Matrix (7.1) und der aktiven Substanz (7.2) die aktive Schicht (7) ausbildet wird.

14. Verwendung einer Verbundscheibe (100) nach einem der Ansprüche 1 bis 11 oder des Produktes nach einem der Verfahrensansprüche 12 bis 13 als Windschutzscheibe eines Fahrzeugs und des elektrisch steuerbaren Funktionselements (5) als Sonnenblende.

## Claims

1. Composite pane (100) comprising a functional element (5) having electrically controllable optical properties, at least comprising
- an inner pane (1) comprising an inner side (III) and an outer side (IV) and an outer pane (2) comprising an inner side (II) and an outer side (I),
- a thermoplastic intermediate layer (3), which joins the inner side (III) of the inner pane (1) to the inner side (II) of the outer pane (2),
- a functional element (5) embedded in the thermoplastic intermediate layer (3) and having electrically controllable optical properties at least comprising a multilayer film (6) containing, arranged surface-to-surface one above the other in this sequence,
- a first carrier film (13.1)
- a first surface electrode (12.1)
- an active layer (7)
- a second surface electrode (12.2)
- a second carrier film (13.2),
wherein the active layer (7) comprises a matrix (7.1) and an active substance (7.2), and the concentration of the active substance (7.2) varies over the surface of the functional element (5).

2. Composite pane (100) comprising a functional element (5) according to claim 1, wherein the active layer (7) comprises a plurality of concentration regions (11), which differ in the concentration of the active substance (7.2).

3. Composite pane (100) comprising a functional element (5) according to claim 2, wherein the active layer (7) has at least a first concentration region (11.1) with an initial concentration c₀ of the active substance (7.2) and has a second concentration region (11.2), in which the concentration of the active substance (7.2) is zero.

4. Composite pane (100) comprising a functional element (5) according to claim 3, wherein a third concentration region (11.3) is arranged between the first concentration region (11.1) and the second concentration region (11.2), in which third concentration region the concentration of the active substance (7.2) is between the concentration in the first concentration region (11.1) and the concentration in the second concentration region (11.2).

5. Composite pane (100) comprising a functional element (5) according to one of claims 1 through 4, wherein the functional element (5) is a PDLC element, the active layer (7) is a PDLC layer, the matrix (7.1) is a polymeric matrix, and the active substance (7.2) is liquid crystals, which are dispersed in the form of liquid crystal droplets in the polymeric matrix.

6. Composite pane (100) comprising a functional element (5) according to claim 5, wherein the concentration of the active substance (7.2) is varied by the number of liquid crystal drops.

7. Composite pane (100) comprising a functional element (5) according to one of claims 1 through 6, wherein there is a concentration gradient of the active substance (7.2) from one pane edge of the composite pane (100) to an opposite pane edge of the composite pane (100).

8. Composite pane (100) comprising a functional element (5) according to one of claims 1 through 7, wherein the composite pane (100) is a windshield of a motor vehicle comprising an engine edge (M), a roof edge (D), and two side edges (S); and the first concentration region (11.1) with an initial concentration c₀ of the active substance (7.2) is arranged adjacent the roof edge (D); and a second concentration region (11.2), in which the concentration of the active substance (7.2) is zero, is arranged adjacent the engine edge (M).

9. Composite pane (100) comprising a functional element (5) according to one of claims 1 through 8, wherein at least one separating line (16) is introduced into at least one surface electrode (12), and the at least one separating line (15) divides the surface electrode (12) into at least two segments (14), whose electrically controllable optical properties can be switched independently of one another.

10. Composite pane comprising a functional element (5) according to one of claims 1 through 9, wherein the thermoplastic intermediate layer (3) comprises at least one first thermoplastic laminating film (4.1) and at least one second thermoplastic laminating film (12.2) and, optionally, a thermoplastic frame film (9), wherein the first thermoplastic laminating film (12.1) joins the functional element (16) to the inner side (III) of the inner pane (13) and the second thermoplastic laminating film (12.2) joins the functional element (16) to the inner side (II) of the outer pane (14) and the optionally present thermoplastic frame film (9) is arranged between the first thermoplastic laminating film (12.1) and the second thermoplastic laminating film (12.2) and surrounds the circumferential edge (8) of the functional element (5).

11. Composite pane (1) comprising a functional element (5) according to claim 10, wherein at least the region of the first thermoplastic laminating film (4.1) and/or the second thermoplastic laminating film (4.2), which overlaps the first concentration region (11.1) of the functional element (5), is tinted or colored.

12. Method for producing a composite pane (100) comprising a functional element (5) according to one of claims 1 through 11 wherein at least
a) a functional element (5) having electrically controllable optical properties is provided, whose active layer (7) comprises a matrix (7.1) and an active substance (7.2), wherein the concentration of the active substance (7.2) varies over the surface of the functional element (5),
b) placed in this sequence on an inner pane (1) or an outer pane (2) are at least one first thermoplastic laminating film (4.1), the functional element (5) provided, and a second thermoplastic laminating film (4.2); and the layer stack is completed with an inner pane (1) or an outer pane (2),
c) the inner pane (1) and the outer pane (2) are joined by lamination, wherein a thermoplastic intermediate layer (3) with an embedded functional element (5) is formed from the first thermoplastic laminating film (4.1) and the second thermoplastic laminating film (4.2).

13. Method according to claim 12, wherein before step a)
a1) a first carrier film (13.1) having a first surface electrode (12.1) is provided,
a2) at least in one section, a solution comprising a matrix substance for forming a matrix (7.1) and an active substance (7.2) is applied on the first surface electrode (12.1), wherein the ratio of active substance (7.2) to matrix substance is selected such that, in at least one section of the first surface electrode (12.1), a first concentration region (11.1) with an initial concentration c₀ of the active substance (7.2) is created,
a3) at least in one other section, a solution comprising a matrix substance for forming a matrix (7.1) and an active substance (7.2) is applied on the first surface electrode (12.1), wherein the ratio of active substance (7.2) to matrix substance is selected such that, in at least one section of the first surface electrode (12.1), a second concentration region (11.2) with a concentration c<c₀ of the active substance is created,
a4) the arrangement is covered with a second carrier film (13.2) with a second surface electrode (12.2), wherein the second surface electrode (12.2) is oriented in the direction of the active substance (7.2),
a5) the layer stack is joined to form a multilayer film (6) as a functional element (5), and the active layer is formed from the matrix (7.1) and the active substance (7.2).

14. Use of a composite pane (100) according to one of claims 1 through 11 or of the product of one of the method claims 12 to 13 as windshield of a vehicle and the electrically controllable functional element (5) as a sun visor.

## Revendications

1. - Vitre feuilletée (100) comportant un élément fonctionnel (5) ayant des propriétés optiques commandables électriquement, comportant au moins
- une vitre intérieure (1) comportant une face intérieure (III) et une face extérieure (IV) et une vitre extérieure (2) comportant une face intérieure (II) et une face extérieure (I) ;
- une couche intermédiaire thermoplastique (3) qui relie la face intérieure (III) de la vitre intérieure (1) à la face intérieure (II) de la vitre extérieure (2) ;
- un élément fonctionnel (5) noyé dans la couche intermédiaire thermoplastique (3) et ayant des propriétés optiques commandables électriquement, comportant au moins un film multicouches (6) contenant, disposés surface contre surface l'un au-dessus de l'autre dans cet ordre :
- un premier film support (13.1);
- une première électrode plate (12.1) ;
- une couche active (7) ;
- une seconde électrode plate (12.2) ;
- un second film support (13.2),
la couche active (7) comportant une matrice (7.1) et une substance active (7.2) et la concentration de la substance active (7.2) variant sur la surface de l'élément fonctionnel (5).

2. - Vitre feuilletée (100) comportant un élément fonctionnel (5), selon la revendication 1, dans laquelle la couche active (7) comporte plusieurs régions de concentration (11) qui diffèrent dans la concentration de la substance active (7.2).

3. - Vitre feuilletée (100) comportant un élément fonctionnel (5), selon la revendication 2, dans laquelle la couche active (7) présente au moins une première région de concentration (11.1) avec une concentration initiale c₀ de la substance active (7.2) et présente une deuxième région de concentration (11.2) dans laquelle la concentration de la substance active (7.2) est égale à zéro.

4. - Vitre feuilletée (100) comportant un élément fonctionnel (5), selon la revendication 3, dans laquelle, entre la première région de concentration (11.1) et la deuxième région de concentration (11.2) est disposée une troisième région de concentration (11.3), dans laquelle la concentration de la substance active (7.2) se situe entre la concentration dans la première région de concentration (11.1) et la concentration dans la deuxième région de concentration (11.2).

5. - Vitre feuilletée (100) comportant un élément fonctionnel (5), selon l'une des revendications 1 à 4, dans laquelle l'élément fonctionnel (5) est un élément PDLC, la couche active (7) est une couche PDLC, la matrice (7.1) est une matrice polymère, et la substance active (7.2) consiste en des cristaux liquides qui sont dispersés sous forme de gouttelettes de cristaux liquides dans la matrice polymère.

6. - Vitre feuilletée (100) comportant un élément fonctionnel (5), selon la revendication 5, dans laquelle la concentration de la substance active (7.2) varie par le nombre de gouttelettes de cristaux liquides.

7. - Vitre feuilletée (100) comportant un élément fonctionnel (5), selon l'une des revendications 1 à 6, dans laquelle il existe un gradient de concentration de la substance active (7.2) d'un bord de vitre de la vitre feuilletée (100) à un bord de vitre opposé de la vitre feuilletée (100).

8. - Vitre feuilletée (100) comportant un élément fonctionnel (5), selon l'une des revendications 1 à 7, dans lequel la vitre feuilletée (100) est un pare-brise d'un véhicule automobile comportant un bord côté moteur (M), un bord côté toit (D) et deux bords latéraux (S), et la première région de concentration (11.1) ayant une concentration initiale c₀ de la substance active (7.2) est disposée au voisinage du bord côté toit (D) et une deuxième région de concentration (11.2) dans laquelle la concentration de la substance active (7.2) est égale à zéro, est disposée au voisinage du bord côté moteur (M).

9. - Vitre feuilletée (100) comportant un élément fonctionnel (5), selon l'une des revendications 1 à 8, dans laquelle au moins une ligne de séparation (16) est introduite dans au moins une électrode plate (12) et ladite au moins une ligne de séparation (15) divise l'électrode plate (12) en au moins deux segments (14) dont les propriétés optiques commandables électriquement sont commutables indépendamment l'une de l'autre.

10. - Vitre feuilletée comportant un élément fonctionnel (5), selon l'une des revendications 1 à 9, dans lequel la couche intermédiaire thermoplastique (3) comporte au moins un premier film laminé thermoplastique (4.1) et au moins un second film laminé thermoplastique (12.2) et facultativement un film de cadre thermoplastique (9), le premier film laminé thermoplastique (12.1) reliant l'élément fonctionnel (16) à la face intérieure (III) de la vitre intérieure (13), et le second film laminé thermoplastique (12.2) reliant l'élément fonctionnel (16) à la face intérieure (II) de la vitre extérieure (14), et le film de cadre thermoplastique (9) facultativement présent est disposé entre le premier film laminé thermoplastique (12.1) et le second film laminé thermoplastique (12.2) et entourant le bord périphérique (8) de l'élément fonctionnel (5) .

11. - Vitre feuilletée (1) comportant un élément fonctionnel (5) selon la revendication 10, dans lequel au moins la région du premier film laminé thermoplastique (4.1) et/ou du second film laminé thermoplastique (4.2) qui recouvre la première région de concentration (11.1) de l'élément fonctionnel (5), est teintée ou colorée.

12. - Procédé de fabrication d'une vitre feuilletée (100) comportant un élément fonctionnel (5), selon l'une des revendications 1 à 11, dans lequel au moins
a) un élément fonctionnel (5) ayant des propriétés optiques commandables électriquement est fourni, dont la couche active (7) comporte une matrice (7.1) et une substance active (7.2), la concentration de la substance active (7.2) variant sur la surface de l'élément fonctionnel (5) ;
b) sur une vitre intérieure (1) ou une vitre extérieure (2), dans cet ordre, au moins un premier film laminé thermoplastique (4.1), l'élément fonctionnel (5) fourni et un second film laminé thermoplastique (4.2) sont posés et l'empilement de couches est terminé par une vitre intérieure (1) ou une vitre extérieure (2) ;
c) la vitre intérieure (1) et la vitre extérieure (2) sont reliées par lamination, une couche intermédiaire thermoplastique (3) ayant un élément fonctionnel (5) intégré étant formée à partir du premier film laminé thermoplastique (4.1) et du second film laminé thermoplastique (4.2).

13. - Procédé selon la revendication 12, dans lequel, avant l'étape a) :
a1) un premier film support (13.1) ayant une première électrode plate (12.1) est fourni,
a2) au moins dans une section, une solution comportant une substance de matrice pour la formation d'une matrice (7.1) et une substance active (7.2) est appliquée sur la première électrode plate (12.1), le rapport de la substance active (7.2) à la substance de matrice étant choisi de telle sorte que, dans au moins une section de la première électrode plate (12.1), il se forme une première région de concentration (11.1) ayant une concentration initiale c₀ de la substance active (7.2) ;
a3) au moins dans une autre section, une solution comportant une substance de matrice pour la formation d'une matrice (7.1) et une substance active (7.2) est appliquée sur la première électrode plate (12.1), le rapport de la substance active (7.2) à la substance de matrice étant choisi de telle sorte qu'il se forme, dans au moins une section de la première électrode plate (12.1), une seconde région de concentration (11.2) ayant une concentration c<c₀ de la substance active ;
a4) le dispositif est recouvert d'un second film support (13.2) ayant une seconde électrode plate (12.2), la seconde électrode plate (12.2) étant orientée en direction de la substance active (7.2) ;
a5) l'empilement de couches est relié pour former un film multicouches (6) en tant qu'élément fonctionnel (5) et, à partir de la matrice (7.1) et de la substance active (7.2), la couche active (7.3) est formée.

14. - Utilisation d'une vitre feuilletée (100) selon l'une des revendications 1 à 13 ou du produit selon l'une des revendications de procédé 12 à 13 comme pare-brise d'un véhicule et de l'élément fonctionnel (5) commandable électriquement comme pare-soleil.
